(19) Europäisches Patentamt
European Patent Office
Office européen des brevets

(11) EP 4 751 980 A1

# (12) EUROPEAN PATENT APPLICATION

published in accordance with Art. 153(4) EPC

(43) Date of publication:
**03.06.2026 Bulletin 2026/23**

(21) Application number: **24851777.3**

(22) Date of filing: **02.08.2024**

(51) International Patent Classification (IPC):
***B60L 15/20*** *(2006.01)* ***B60W 30/00*** *(2006.01)*

(52) Cooperative Patent Classification (CPC):
**B60L 15/20; B60W 30/00**

(86) International application number:
**PCT/JP2024/027746**

(87) International publication number:
**WO 2025/033352 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023130618**

(71) Applicants:
- **Mitsubishi Jidosha Kogyo Kabushiki Kaisha Tokyo 108-8410 (JP)**
- **The University of Tokyo Bunkyo-ku, Tokyo 113-8654 (JP)**

(72) Inventors:
- **TAKAHASHI, Ryota Tokyo 108-8410 (JP)**
- **FUJIMOTO, Hiroshi Tokyo 113-8654 (JP)**
- **FUSE, Hiroyuki Tokyo 113-8654 (JP)**
- **TAKAHASHI, Naoki Tokyo 108-8410 (JP)**
- **OKAMURA, Yutaro Tokyo 108-8410 (JP)**
- **ISHIHARA, Yuji Tokyo 108-8410 (JP)**

(74) Representative: **Vossius & Partner Patentanwälte Rechtsanwälte mbB Siebertstraße 3 81675 München (DE)**

## (54) VEHICLE CONTROL DEVICE AND VEHICLE CONTROL METHOD

(57) A disclosed vehicle control device (10) includes a sum model (M1) that is obtained by modeling motion states of a left drive system and a right drive system during straight traveling, a difference model (M2) that is obtained by modeling motion states of the left drive system and the right drive system during turning, a calculation unit (11), a limiting unit (12), and a control unit (13). The calculation unit (11) calculates a sum mode target slip ratio ($y_S$) and a difference mode target slip ratio ($y_D$). The limiting unit (12) sets an upper limit value ($y_{SH}$, $y_{DH}$) and a lower limit value ($Y_{SL}$, $Y_{DL}$) of each of the sum mode target slip ratio ($y_S$) and the difference mode target slip ratio ($y_D$) to limit the target slip ratios ($y_S$, $y_D$). The control unit (13) controls driving forces of the left drive system and the right drive system, based on the limited sum mode target slip ratio ($y_S$) and difference mode target slip ratio ($y_D$), the sum model (M1), and the difference model (M2).

Fig. 1

Right
Front
Rear
Left
1
Vehicle control device
10
Sum model
Difference model
M1
M2
Calculation unit
11
Limiting unit
12
Control unit
13
14
15
16
17 (17R)
18 (18R)
5 (5R)
6 (6R)
4 (4R)
2 (2R)
3
2 (2L)
4 (4L)
7
6 (6L)
5 (5L)
17 (17L)
18 (18L)

EP 4 751 980 A1

## Description

[Technical Field]

The present invention relates to a vehicle control device and a vehicle control method related to driving force control of a vehicle.

[Background Art]

In the related art, in a vehicle including a mechanism capable of adjusting driving forces of left and right wheels, there is known a vehicle that controls the driving forces so as to curb torsional vibration of the left and right wheels (see PTL 1). In addition, there is also known a device that sets target slip ratios of the left and right wheels and controls the driving forces of the left and right wheels so that the actual slip ratios are the target slip ratios (see PTL 2).

[Citation List]

[Patent Literature]

[PTL 1]
JP 2019-103249 A
[PTL 2]
WO 2023/013565 A1

[Summary of Invention]

[Technical Problem]

As the value of a target slip ratio is set to be larger, the actual slip ratio increases, and a driving force transmitted to a road surface decreases. Thus, in order to enhance the traveling stability of a vehicle, it is desirable to keep the target slip ratio within a predetermined range. On the other hand, when a range that the target slip ratio can take is fixed, there is a problem that a longitudinal force and a lateral force (tire grip limit) of wheels cannot be efficiently utilized in driving force control.

For example, in driving force control using a sum mode target slip ratio equivalent to a sum of target values of slip ratios of left and right wheels and a difference mode target slip ratio equivalent to a difference between the target values of the slip ratios, a margin of the difference mode target slip ratio with respect to the tire grip limit becomes larger as the sum mode target slip ratio is smaller, and setting for increasing the difference mode target slip ratio is allowed. Similarly, as the difference mode target slip ratio becomes smaller, a margin of the sum mode target slip ratio with respect to the tire grip limit becomes larger, and setting for increasing the sum mode target slip ratio is allowed. Such characteristics are not considered in the driving force control of the related art, and there is room for improvement.

One object of the present invention is to provide a vehicle control device and a vehicle control method which are created in view of the above problems and capable of efficiently utilizing a longitudinal force and a lateral force of wheels in driving force control. Note that, in addition to this object, other objects of the present invention involve achieving operations and effects derived from configurations described in "Description of Embodiments" to be described later, which cannot be obtained by techniques in the related art.

[Solution to Problem]

The disclosed invention can be realized as aspects (application examples) to be disclosed below, and solves at least a part of the above problems. Second and subsequent aspects are all aspects that can be additionally selected as appropriate, and are all aspects that can be omitted. None of the second and subsequent aspects discloses an aspect or configuration that is essential to the present invention.

Aspect 1. A vehicle control device according to the present disclosure is a vehicle control device that controls driving forces of a left drive system and a right drive system in a vehicle including the left drive system including a left axle and a left wheel to which power is transmitted from a left drive source, and the right drive system including a right axle and a right wheel to which power is transmitted from a right drive source. The vehicle control device includes a sum model that is obtained by modeling motion states of the left drive system and the right drive system during straight traveling, and a difference model that is obtained by modeling motion states of the left drive system and the right drive system during turning. The vehicle control device includes a calculation unit, a limiting unit, and a control unit.

The calculation unit calculates a sum mode target slip ratio equivalent to a sum of target values of slip ratios of the left wheel and the right wheel and a difference mode target slip ratio equivalent to a difference between the target values of the slip ratios. The limiting unit sets an upper limit value and a lower limit value of each of the sum mode target slip ratio and the difference mode target slip ratio to limit the sum mode target slip ratio and the difference mode target slip ratio. The control unit controls the driving forces of the left drive system and the right drive system, based on the sum mode target slip ratio and the difference mode target slip ratio, which are limited by the limiting unit, and the sum model and the difference model.

Aspect 2. In an aspect including the above-described aspect 1, it is preferable that the limiting unit sets the upper limit value and the lower limit value based on actual slip ratios of the left wheel and the right wheel.

Aspect 3. In an aspect including the above-described aspect 2, it is preferable that the limiting unit sets the upper limit value and the lower limit value of the sum mode target slip ratio, based on a difference mode actual slip ratio which is an actual slip ratio of the difference model corresponding to a difference between the actual slip ratios of the left wheel and the right wheel.

Aspect 4. In an aspect including the above-described aspect 2, it is preferable that the limiting unit sets the upper limit value and the lower limit value of the difference mode target slip ratio, based on a sum mode actual slip ratio which is an actual slip ratio of the sum model corresponding to a sum of the actual slip ratios of the left wheel and the right wheel.

Aspect 5. In an aspect including the above-described aspect 1, it is preferable that the limiting unit sets the upper limit value and the lower limit value based on target slip ratios of the left wheel and the right wheel.

Aspect 6. In an aspect including the above-described aspect 1, it is preferable that the limiting unit sets the upper limit value and the lower limit value based on a required driving force of the vehicle.

Aspect 7. In an aspect including the above-described aspect 6, it is preferable that the limiting unit sets the upper limit value and the lower limit value based on a driving force ratio which is a ratio between a required sum mode driving force equivalent to a sum of required driving forces of the left wheel and the right wheel and a required difference mode driving force equivalent to a difference between required driving forces of the left wheel and the right wheel.

Aspect 8. In an aspect including the above-described aspect 7, it is preferable that the limiting unit causes an upper limit value ratio, which is a ratio between the upper limit value of the sum mode target slip ratio and the upper limit value of the difference mode target slip ratio, to be proportional to the driving force ratio.

Aspect 9. In an aspect including the above-described aspect 8, it is preferable that the limiting unit changes a proportional constant of the upper limit value ratio with respect to the driving force ratio in accordance with a traveling state of the vehicle or a driver's operation.

Aspect 10. A vehicle control method according to the present disclosure is a vehicle control method of controlling driving forces of a left drive system and a right drive system in a vehicle including the left drive system including a left axle and a left wheel to which power is transmitted from a left drive source, and the right drive system including a right axle and a right wheel to which power is transmitted from a right drive source. First, the vehicle control method includes preparing a sum model that is obtained by modeling motion states of the left drive system and the right drive system during straight traveling, and a difference model that is obtained by modeling motion states of the left drive system and the right drive system during turning.

The vehicle control method includes calculating a sum mode target slip ratio equivalent to a sum of target values of slip ratios of the left wheel and the right wheel and a difference mode target slip ratio equivalent to a difference between the target values of the slip ratios. The vehicle control method includes setting an upper limit value and a lower limit value of each of the sum mode target slip ratio and the difference mode target slip ratio to limit the sum mode target slip ratio and the difference mode target slip ratio. The vehicle control method includes controlling the driving forces of the left drive system and the right drive system based on the limited sum mode target slip ratio and difference mode target slip ratio, the sum model, and the difference model.

[Advantageous Effects of Invention]

According to the disclosed vehicle control device and vehicle control method, an upper limit value and a lower limit value of each of a sum mode target slip ratio and a difference mode target slip ratio are set, and thus it is possible to set a target slip ratio at which a longitudinal force and a lateral force of wheels are efficiently utilized.

[Brief Description of Drawings]

[Fig. 1]

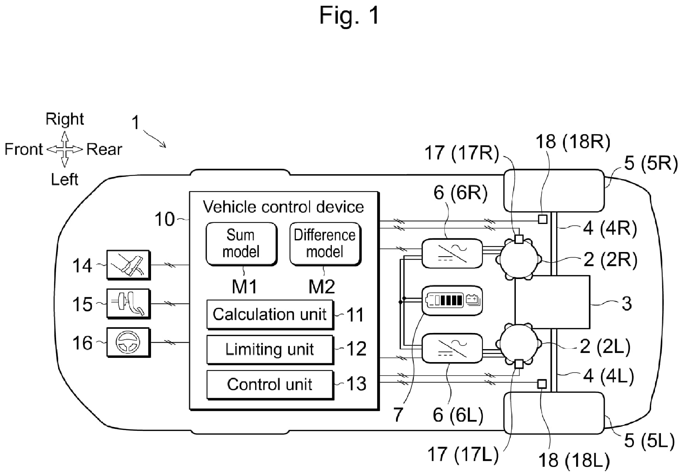

Fig. 1 is a block diagram of a vehicle to which a vehicle control device is applied.
[Fig. 2]

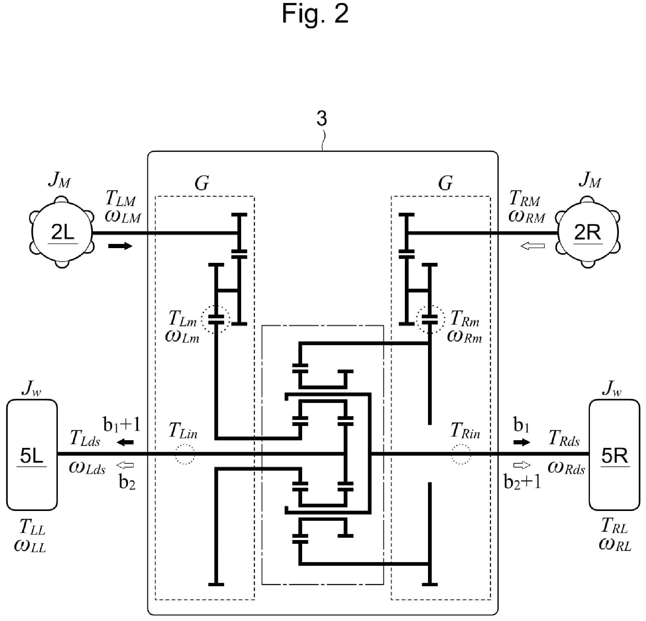

Fig. 2 is a schematic view illustrating an example of a structure of a drive system of a vehicle.
[Fig. 3]

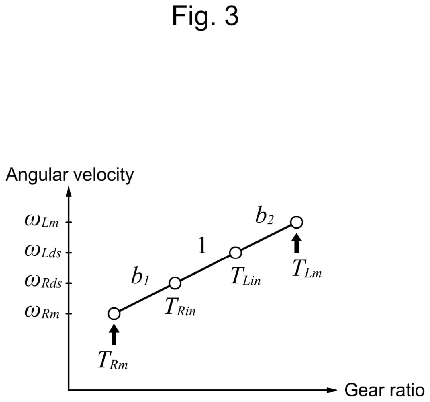

Fig. 3 is a speed diagram of a power distribution mechanism of a vehicle having the structure of Fig. 2.
[Fig. 4]

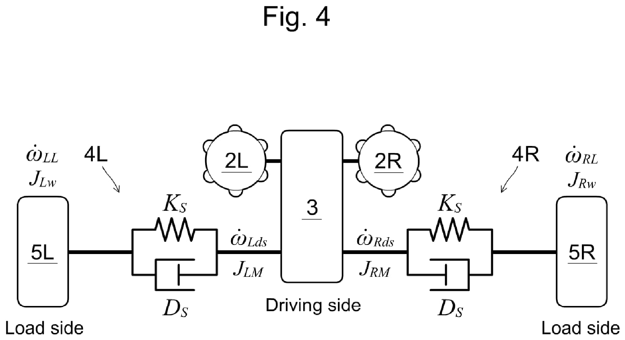

Fig. 4 is a schematic diagram illustrating structures of a left drive system and a right drive system of a vehicle.
[Fig. 5]

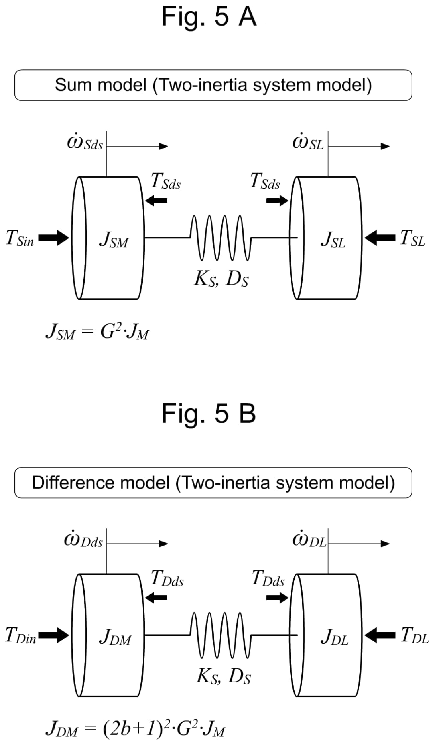

Fig. 5A is a schematic diagram of a sum model, and Fig. 5B is a schematic diagram of a difference model.
[Fig. 6]

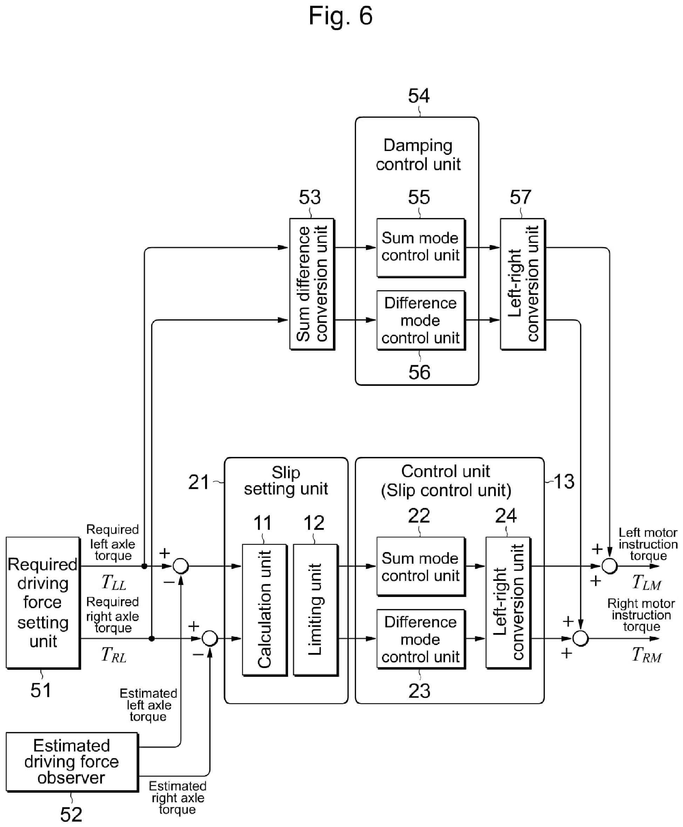

Fig. 6 is a block diagram illustrating functions (control examples) of a vehicle control device.
[Fig. 7]

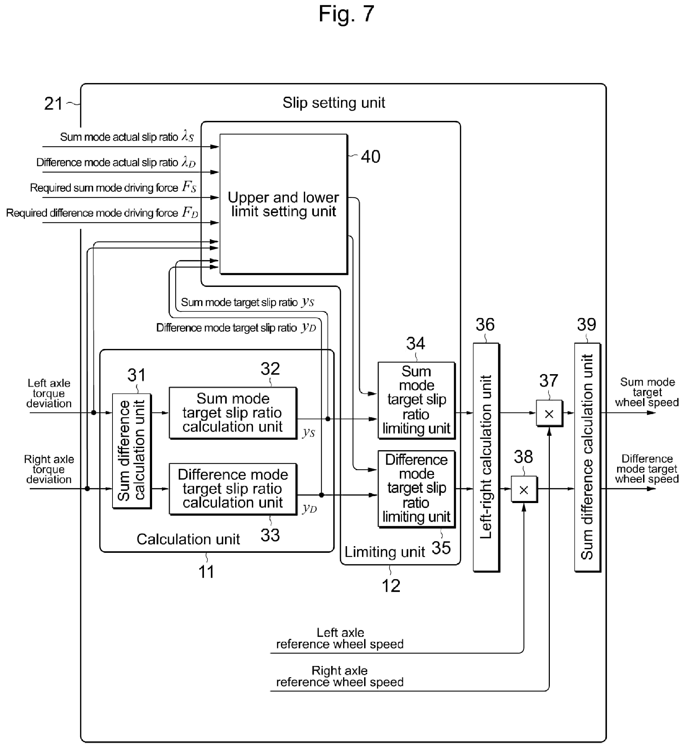

Fig. 7 is a block diagram illustrating functions (control examples) of a slip setting unit in Fig. 6.
[Fig. 8]

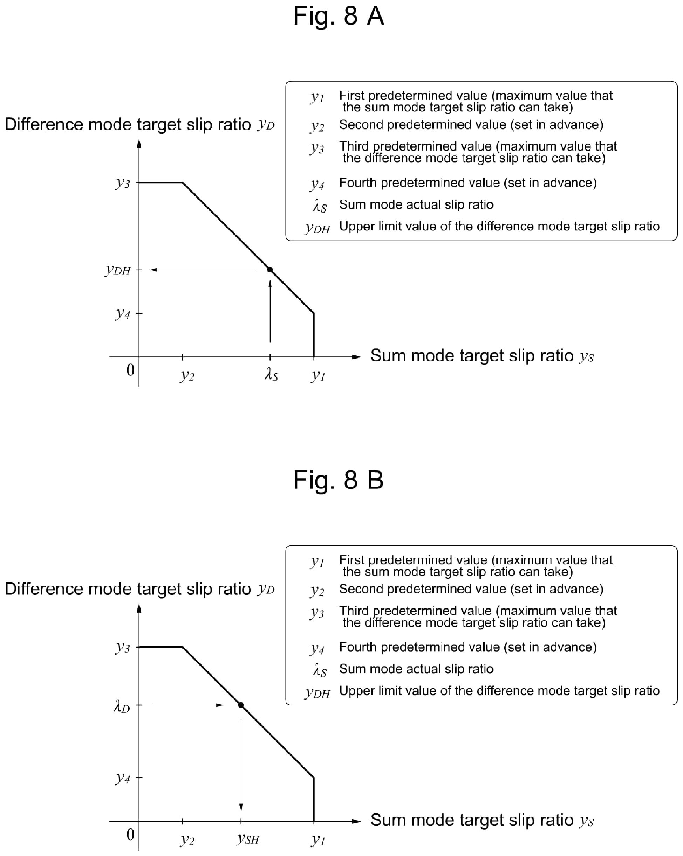

Fig. 8A is a graph showing a method of setting an upper limit value of a difference mode target slip ratio based on a sum mode actual slip ratio, and Fig. 8B is a graph showing a method of setting an upper limit value of a sum mode target slip ratio based on a difference mode actual slip ratio.
[Fig. 9]

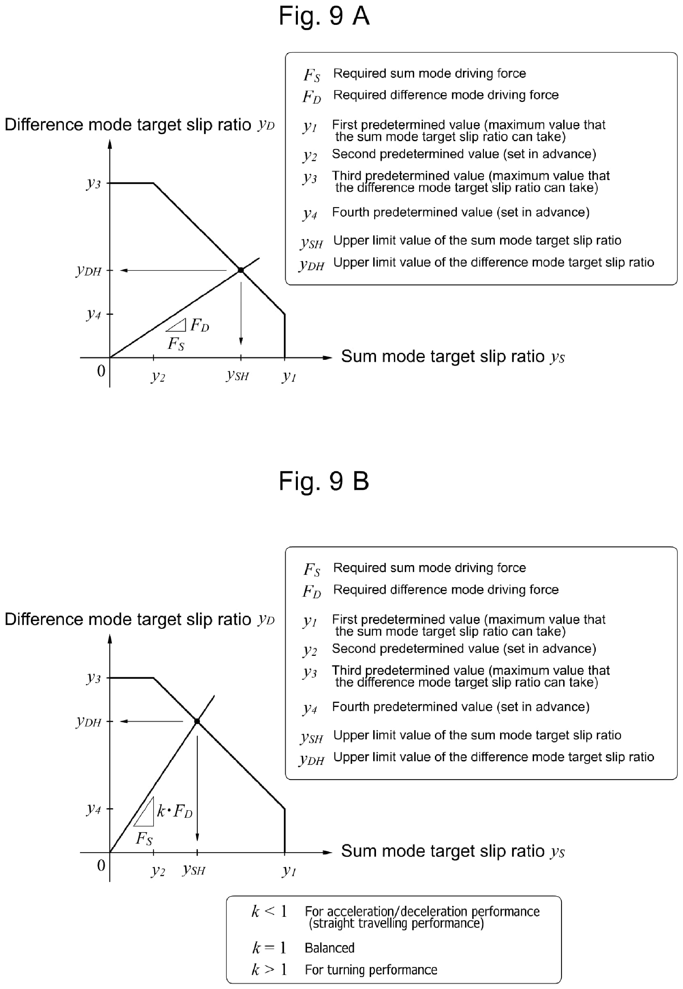

Figs. 9A and 9B are graphs showing a method of setting an upper limit value of a sum mode target slip ratio and an upper limit value of a difference mode target slip ratio based on a required driving force of a vehicle.
[Fig. 10]

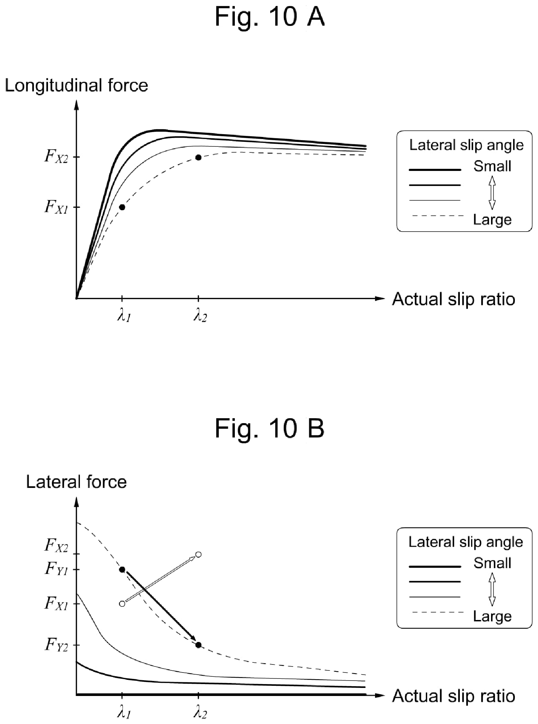

Fig. 10A is a graph showing a relationship between an actual slip ratio and a longitudinal force during turning for a plurality of side slip angles (lateral slip angle), and Fig. 10B is a graph showing a relationship between an actual slip ratio and a lateral force during turning for a plurality of side slip angles.

[Description of Embodiments]

The type of vehicle in which the disclosed vehicle control device and vehicle control method are used is, for example, an engine vehicle (gasoline automobile, diesel automobile), an electric vehicle, or a hybrid vehicle. The disclosed invention is a vehicle including a mechanism capable of adjusting driving forces of at least a left wheel and a right wheel (in other words, the left and right wheels, that is, left and right drive wheels), and the types and number of drive sources (internal combustion engine, motor, and the like) are not limited.

The disclosed invention is preferably applied to an automobile that travels by driving left and right wheels (left and right drive wheels) using a plurality of drive sources. Here, one of the plurality of drive sources is referred to as a left drive source, and one of the other drive sources is referred to as a right drive source. One of the left and right wheels located on the left side of the vehicle is referred to as a left wheel, and the other is referred to as a right wheel. The disclosed vehicle control device and vehicle control method can be used to control a vehicle including a left drive system including a left axle and a left wheel to which power from a left drive source is transmitted, and a right drive system including a right axle and a right wheel to which power from a right drive source is transmitted.

The layout of each of the left drive source and the right drive source may or may not be set to correspond to the left-right direction determined based on a traveling direction of the vehicle. In addition, the left drive system and the right drive system may operate independently of each other, or may be connected to each other via a transmission mechanism or a power distribution mechanism. The disclosed vehicle control device and vehicle control method can be utilized for control of an in-wheel motor vehicle in which each of the left and right wheels is driven by an individual motor, and can also be utilized for control of a torque vectoring vehicle in which the left and right wheels can transmit a driving force and a torque to each other.

1. Configuration

A vehicle control device 10 as an embodiment is mounted on a vehicle 1 illustrated in Fig. 1. The vehicle 1 includes left and right wheels 5 (wheels) disposed lined up in the vehicle width direction, a power distribution mechanism 3 (differential mechanism) that applies a torque difference to the left and right wheels 5, and a pair of motors 2 connected to the power distribution mechanism 3. In the drawing of the embodiment, alphabets L and R added to numerical symbols represent arrangement positions of elements according to the symbols (on the left side or the right side of the vehicle 1). For example, symbol 5L represents one (left wheel) of the left and right wheels 5 located on the left side of the vehicle 1, and symbol 5R represents the other (right wheel) located on the right side. The positions of the left and right wheels 5 in the front-rear direction are not limited, and may be the front wheels or the rear wheels of the vehicle 1.

The motor 2 (drive source) has a function of driving at least one of the front wheels or the rear wheels of the vehicle 1, and can have a function of driving all the four wheels. One of the pair of motors 2 which is disposed on the left side is a left motor 2L (left drive source), and the other disposed on the right side is a right motor 2R (right drive source). The left motor 2L and the right motor 2R operate independently of each other, and can individually output driving forces of different magnitudes. These motors 2 are connected to the power distribution mechanism 3 via a pair of speed reduction mechanisms provided separately from each other.

The vehicle 1 includes the power distribution mechanism 3 that amplifies a torque difference between the pair of motors 2 and distributes torque to each of the left and right wheels 5. The power distribution mechanism 3 of the present embodiment is a differential mechanism having a yaw control function (active yaw control (AYC) function), and is interposed between an axle 4 (left axle 4L) connected to the left wheel 5L and an axle 4 (right axle 4R) connected to the right wheel 5R. The yaw control function is a function of adjusting the yaw moment and stabilizing the posture of the vehicle 1 by actively controlling a sharing ratio of the driving forces (driving torque) of the left and right wheels 5. A planetary gear mechanism, a differential gear mechanism, and the like are incorporated in the power distribution mechanism 3. A vehicle drive device including the pair of motors 2 and the power distribution mechanism 3 is also referred to as a dual motor AYC (DM-AYC) device.

As illustrated in Fig. 2, the power distribution mechanism 3 includes a pair of speed reduction mechanisms (gear trains surrounded by a broken line in Fig. 2) that reduce the rotational speed of the motor 2, and a transmission mechanism (gear trains surrounded by an alternating dotted-dashed line in Fig. 2). The speed reduction mechanism is a mechanism that increases a torque by decelerating the speed of motor torque (driving force) output from the motor 2. A reduction ratio G of the speed reduction mechanism is appropriately set in accordance with the output characteristics and performance of the motor 2. When the torque performance of the motor 2 is sufficiently high, the speed reduction mechanism may be omitted. The transmission mechanism is a mechanism that amplifies a torque difference transmitted to each of the left and right wheels 5.

The transmission mechanism of the power distribution mechanism 3 illustrated in Fig. 2 includes a pair of planetary gear mechanisms. These planetary gear mechanisms have a structure in which planetary gears provided in respective carriers and rotation axes thereof are connected to each other. Each carrier rotatably supports the planetary gear and supports the planetary gear to revolve around a sun gear. Driving forces transmitted from the left and right motors 2 are input to a ring gear and a sun gear of one planetary gear mechanism. The driving forces transmitted to the left and right wheels 5 are extracted from a sun gear and a carrier of the other planetary gear mechanism. The structure of the power distribution mechanism 3 illustrated in Fig. 2 is merely an example for implementing the yaw control function, and other known structures can be used.

In Fig. 2, $J_M$ represents a motor inertia moment (the moment of inertia of the motor 2), and $J_w$ represents a wheel inertia moment (the moment of inertia of the left and right wheels 5). Regarding the parameters of the left drive system, $T_{LM}$ is a left motor input torque (left motor instruction torque), $T_{Lm}$ is a left motor input torque after deceleration by a deceleration mechanism, $\omega_{LM}$ is a left motor angular velocity, $\omega_{Lm}$ is a left motor angular velocity after deceleration by the deceleration mechanism, $T_{Lin}$ is a left driving side torque, $T_{Lds}$ is a left axle torque, $T_{LL}$ is a left wheel load side torque, $\omega_{Lds}$ is a left driving side angular velocity, and $\omega_{LL}$ is a left wheel angular velocity (a target speed of the left wheel 5L). Similarly, regarding the parameters of the right drive system, $T_{RM}$ is a right motor input torque (right motor instruction torque), $T_{Rm}$ is a right motor input torque after deceleration by the deceleration mechanism, $\omega_{RM}$ is a right motor angular velocity, $\omega_{Rm}$ is a right motor angular velocity after deceleration by the deceleration mechanism, $T_{Rin}$ is a right driving side torque, $T_{Rds}$ is a right axle torque, $T_{RL}$ is a right wheel load side torque, $\omega_{Rds}$ is a right driving side angular velocity, and $\omega_{RL}$ is a right wheel angular velocity (a target speed of the right wheel 5R).

Fig. 3 is a speed diagram of the power distribution mechanism 3. In Figs. 2 and 3, $b_1$ and $b_2$ represent torque difference amplification factors (deceleration rate, differential deceleration ratio) determined in accordance with the structure of the gear incorporated in the power distribution mechanism 3. The torque difference amplification factor related to the power transmission from the left motor 2L to the right wheel 5R is $b_1$, and a torque difference amplification factor related to the power transmission from the left motor 2L to the left wheel 5L is $b_1+1$. The torque difference amplification factor related to the power transmission from the right motor 2R to the left wheel 5L is $b_2$, and a torque difference amplification factor related to the power transmission from the right motor 2R to the right wheel 5R is $b_2+1$.

As illustrated in Fig. 1, each of the pair of motors 2 is electrically connected to a battery 7 via an inverter 6 (6L, 6R). The inverter 6 is a conversion device (DC-AC inverter) that mutually converts power (DC power) of a DC circuit on the battery 7 side and power (AC power) of an AC circuit on the motor 2 side. The battery 7 is, for example, a lithium ion secondary battery or a nickel-metal hydride secondary battery, and is a secondary battery capable of supplying a high voltage direct current of several hundred volts. During powering of the motor 2, the DC power is converted into AC power by the inverter 6 and supplied to the motor 2. During power generation by the motor 2, the generated power is converted into DC power by the inverter 6 and charged in the battery 7. The operating state of the inverter 6 is controlled by the vehicle control device 10.

The vehicle control device 10 is one of electronic control devices (ECU, Electronic Control Unit) mounted on the vehicle 1. The vehicle control device 10 has a function of controlling output for each of the left motor 2L and the right motor 2R in the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted.

The vehicle control device 10 incorporates a processor (central processing unit), a memory (main memory), a storage device (storage), an interface device, and the like (not illustrated), which are communicably connected to each other via an internal bus. The contents of determination and control performed by the vehicle control device 10 are recorded and saved in the memory as firmware or an application program, and when the program is executed, the contents of the program are expanded in a memory space and executed by the processor.

To the vehicle control device 10, an accelerator opening sensor 14, a brake sensor 15, a steering angle sensor 16, a resolver 17, and a wheel speed sensor 18 are connected. The accelerator opening sensor 14 is a sensor that detects a depression amount (accelerator opening degree) of an accelerator pedal and a depression speed thereof. The brake sensor 15 is a sensor that detects a depression amount (brake pedal stroke) of a brake pedal and a depression speed thereof. The steering angle sensor 16 is a sensor that detects a steering angle (actual tire-turning angles or a rotation angle of a steering wheel) of the left and right wheels 5.

The resolvers 17 (17L, 17R) are sensors that detect the speeds of the motors 2, and provided one for each of the pair of motors 2. The resolvers 17 output information of the rotation angles of the motors 2 in the form of two-phase AC voltages. The speed of the motor 2 is grasped from changes in the AC voltage over time. The wheel speed sensors 18 (18L, 18R) are sensors that detect the speeds of the axles 4. The vehicle control device 10 controls the output of the pair of motors 2 (2L, 2R) by controlling the operating state of the inverters 6 (6L, 6R) on the basis of pieces of information detected by the various sensors 14 to 18 mentioned above. Instead of the resolvers 17, another sensor (hall sensor, encoder, or the like) having a different internal structure and operation principle may be used.

2. Vehicle control device

As illustrated in Fig. 1, the vehicle control device 10 includes a sum model M1, a difference model M2, a calculation unit 11, a limiting unit 12, and a control unit 13 as elements for controlling the driving forces of the left drive system and the right drive system. These elements are illustrated by classifying the functions of the vehicle control device 10 for convenience. These elements may be described as independent programs for implementing the functions of the respective elements. Alternatively, a plurality of elements may be combined and described as one composite program.

The sum model M1 is a model obtained by modeling motion states of the left drive system (a power transmission path from the left motor 2L to the left wheel 5L) and the right drive system (a power transmission path from the right motor 2R to the right wheel 5R) when the vehicle 1 travels straight, in order to grasp the motion states. A parameter input to the sum model M1 is equivalent to the sum of a parameter input to the left drive system and a parameter input to the right drive system, and is referred to as a "sum model state quantity". The difference model M2 is a model obtained by modeling the motion states of the left drive system and the right drive system during turning of the vehicle 1, in order to grasp the motion states. A parameter input to the difference model M2 is equivalent to a difference between the parameter input to the left drive system and the parameter input to the right drive system, and is referred to as a "difference model state quantity".

The calculation unit 11 calculates a sum mode target slip ratio $y_S$, which is a target slip ratio of the sum model M1 corresponding to the sum of target values of the slip ratios of the left wheel 5L and the right wheel 5R, and a difference mode target slip ratio $y_D$, which is a target slip ratio of the difference model M2 corresponding to a difference between the target values of the slip ratios. The calculation unit 11 calculates the sum mode target slip ratio $y_S$ and the difference mode target slip ratio $y_D$ based on, for example, a required driving force and an estimated driving force of the vehicle 1. The required driving force mentioned here includes a required torque, a required rotation speed (required angular velocity), and a required output (required horsepower, required power) related to the motor 2 and the left and right wheels 5, and the estimated driving force includes an estimated torque, an estimated rotation speed (required angular velocity), and an estimated output (estimated horsepower, estimated power) related to the motor 2 and the left and right wheels 5.

In the vehicle control device 10 of the present embodiment, a difference (left axle torque deviation) between a required left axle torque $T_{LL}$ required for the left axle 4L and an estimated left axle torque which is the actual estimated torque value of the left axle 4L is calculated, and a difference (left axle torque deviation) between a required right axle torque $T_{RL}$ required for the right axle 4R and an estimated right axle torque which is the actual estimated torque value of the right axle 4R is calculated. The calculation unit 11 calculates a sum model torque deviation equivalent to the sum of the left axle torque deviation and the right axle torque deviation, and calculates a difference model torque deviation equivalent to the difference between the left axle torque deviation and the left axle torque deviation. Thereafter, the sum mode target slip ratio $y_S$ is calculated based on the sum model torque deviation, and the difference mode target slip ratio $y_D$ is calculated based on the difference model torque deviation.

The limiting unit 12 is a unit (limiter) that sets upper limit values $y_{SH}$, $y_{DH}$ and lower limit values $y_{SL}$, $y_{DL}$ of the sum mode target slip ratio $y_S$ and the difference mode target slip ratio $y_D$, and limits the sum mode target slip ratio $y_S$ and the difference mode target slip ratio $y_D$ calculated by the calculation unit 11 to values that are less than or equal to the upper limit values $y_{SH}$, $y_{DH}$ and greater than or equal to the lower limit values $y_{SL}$, $y_{DL}$. The upper limit value $y_{SH}$ and the lower limit value $y_{SL}$ of the sum mode target slip ratio $y_S$ have the same absolute value and are values different only in sign ($y_{SL} = -y_{SH}$). The upper limit value $y_{DH}$ and the lower limit value $y_{DL}$ of the difference mode target slip ratio $y_D$ also have the same absolute value and are values different only in sign ($y_{DL} = -y_{DH}$). The upper limit value $y_{SH}$ of the sum mode target slip ratio $y_S$ does not necessarily coincide with the upper limit value $y_{DH}$ of the difference mode target slip ratio $y_D$, and may be set to a different value.

The control unit 13 controls driving forces of the left drive system and the right drive system, based on the sum mode target slip ratio $y_S$ and the difference mode target slip ratio $y_D$, which are limited by the limiting unit 12, and the sum model M1 and the difference model M2. The control unit 13 controls the driving forces of the left drive system and the right drive system using a sum mode instruction torque $T_S$ (sum mode request torque) obtained by applying the sum mode target slip ratio $y_S$, which is limited by the limiting unit 12, to the sum model M1 and a difference mode instruction torque $T_D$ (difference mode request torque) obtained by applying the difference mode target slip ratio $y_D$, which is limited by the limiting unit 12, to the difference model M2. Here, a left motor instruction torque $T_{LM}$ and a right motor instruction torque $T_{RM}$ are calculated such that both the sum mode instruction torque $T_S$ and the difference mode instruction torque $T_D$ are achieved. Thereafter, the inverter 6 is controlled so as to obtain the calculated left motor instruction torque $T_{LM}$ and right motor instruction torque $T_{RM}$. Thereby, the motion states of the left drive system and the right drive system are easily controlled to be desired states and with high accuracy.

Fig. 4 is a schematic diagram illustrating the structures of the left drive system and the right drive system of the vehicle 1. Each of the left axle 4L and the right axle 4R can correspond to a structure in which a spring (axle rigidity $K_s$) and a damper (axle viscosity $D_s$) are connected in parallel. In Fig. 4, $J_{LM}$ is an inertia moment on the power distribution mechanism 3 side (driving side) with respect to the left axle 4L, $J_{Lw}$ is an inertia moment on the left wheel 5L side (load side) with respect to the left axle 4L, $J_{RM}$ is an inertia moment on the power distribution mechanism 3 side (driving side) with respect to the right axle 4R, and $J_{Rw}$ is an inertia moment on the right wheel 5R side (load side) with respect to the right axle 4R. Fig. 4 also illustrates a differential value (left driving side angular acceleration) of a left driving side angular velocity $\omega_{Lds}$, a differential value (left wheel angular acceleration) of a left wheel angular velocity $\omega_{LL}$, a differential value (right driving side angular acceleration) of a right driving side angular velocity $\omega_{Rds}$, and a differential value (right wheel angular acceleration) of a right wheel angular velocity $\omega_{RL}$.

Based on the above schematic diagram, the configuration of the sum model M1 can be modeled as a configuration as illustrated in Fig. 5A, and the configuration of the difference model M2 can be modeled as a configuration as illustrated in Fig. 5B. The sum model M1 is suitable for use in damping control and slip control for the axle 4 and the left and right wheels 5 related to straight traveling of the vehicle 1, and the difference model M2 is suitable for use in damping control and slip control for the axle 4 and the left and right wheels 5 related to turning of the vehicle 1. In the present embodiment, both the sum model M1 and the difference model M2 are two-inertia system models, but each of the models may be configured as a multi-inertia system model including three or more inertia moments or spring dampers.

As illustrated in Fig. 5A, the sum model M1 includes a driving side inertia moment $J_{SM}$, a spring damper designed with a rigidity $K_s$ and a viscosity $D_s$, and a load side inertia moment (sum mode wheel nominal inertia moment) $J_{SL}$. The driving side inertia moment $J_{SM}$ is calculated based on an inertia moment $J_M$ of a drive source (a left drive source and a right drive source), and for example, $J_{SM} = G^2 J_M$. The load side inertia moment $J_{SL}$ is calculated based on a vehicle body weight M (converted to wheel terms). Friction may also be considered in calculating the driving side inertia moment $J_{SM}$ and the load side inertia moment $J_{SL}$. Equations of motion according to the sum model M1 are shown below.

[Math. 1]

Equation of motion of driving side

$$J_{SM}\dot{\omega}_{Sds} = T_{Sin} - T_{Sds}$$

Equation of motion of load side

$$J_{SL}\dot{\omega}_{SL} = T_{Sds} - T_{SL}$$

Equation of motion of spring damper system

$$T_{Sds} = K_S \int (\omega_{Sds} - \omega_{SL}) + D_S(\omega_{Sds} - \omega_{SL})$$

As illustrated in Fig. 5B, the difference model M2 includes a driving side inertia moment $J_{DM}$ which is an equivalent inertia moment when a left-right difference occurs (during turning), a spring damper designed with a rigidity $K_s$ and a viscosity $D_s$, and a load side inertia moment (difference mode wheel nominal inertia moment) $J_{DL}$. The driving side inertia moment $J_{DM}$ is calculated based on the inertia moment $J_M$ of the drive sources (the left drive source and the right drive source) and the torque difference amplification factors ($b_1$, $b_2$, and the like) of the power distribution mechanism 3, and for

example, $J_{DM} = (2b_1 + 1)^2G^2J_M$. The load side inertia moment $J_{DL}$ is calculated based on the yaw inertia moment (converted to wheel terms) of the vehicle 1. Friction may also be considered in calculating the driving side inertia moment $J_{DM}$ and the load side inertia moment $J_{DL}$. Equations of motion according to the difference model M2 are shown below.

[Math. 2]

Equation of motion of driving side

$$J_{DM}\dot{\omega}_{Dds} = T_{Din} - T_{Dds}$$

Equation of motion of load side

$$J_{DL}\dot{\omega}_{DL} = T_{Dds} - T_{DL}$$

Equation of motion of spring damper system

$$T_{Dds} = K_S \int (\omega_{Dds} - \omega_{DL}) + D_S(\omega_{Dds} - \omega_{DL})$$

By applying a sum model state quantity to the sum model M1, parameters representing the motion states of the left drive system and the right drive system when the vehicle 1 travels straight are acquired. For example, a sum mode instruction torque Ts is obtained by applying the sum mode target slip ratio $y_S$ to the sum model M1. The same applies to the difference model M2, and a difference model state quantity is applied to the difference model M2, thereby acquiring parameters representing the motion states of the left drive system and the right drive system during turning of the vehicle 1. For example, a difference mode instruction torque $T_D$ is obtained by applying the difference mode target slip ratio $y_D$ to the difference model M2.

3. Specific example

Fig. 6 is a block diagram illustrating a specific control example by the vehicle control device 10. The vehicle control device 10 is provided with a slip setting unit 21 including the calculation unit 11 and the limiting unit 12, and the control unit 13 has a function of calculating a control amount related to slip control of the vehicle 1. The control unit 13 is provided with a sum mode control unit 22, a difference mode control unit 23, and a left-right conversion unit 24. In the control unit 13, for example, a sum model M1 and a difference model M2 for slip control are prepared.

The vehicle control device 10 is provided with a required driving force setting unit 51, an estimated driving force observer 52, a sum difference conversion unit 53, a damping control unit 54, and a left-right conversion unit 57. The damping control unit 54 has a function of calculating a control amount related to damping control (vibration suppression control) of the vehicle 1. In the damping control unit 54, a sum model M1 and a difference model M2 for damping control which are different from the sum model M1 and the difference model M2 for slip control are prepared. In the vehicle control device 10, the sum of the control amount of the slip control by the control unit 13 and the control amount of the damping control by the damping control unit 54 is final motor instruction torques $T_{LM}$ and $T_{RM}$.

The required driving force setting unit 51 sets a required driving force requested by the driver for the vehicle 1. Here, for example, the required left axle torque $T_{LL}$ required for the left axle 4L and the required right axle torque $T_{RL}$ required for the right axle 4R are calculated based on an accelerator opening, a brake pedal stroke, a steering angle, a vehicle speed, and the like. Information on the required left axle torque $T_{LL}$ and the required right axle torque $T_{RL}$ calculated here is transmitted to the sum difference conversion unit 53.

The estimated driving force observer 52 calculates an estimated value equivalent to the actual driving force of the vehicle 1. Here, for example, an estimated left axle torque $T_{LL}$' which is an estimation drive torque value of the left axle 4L and an estimated right axle torque $T_{RL}$' which is an estimation drive torque value of the right axle 4R are calculated based on a motor instruction torque according to a control signal output to the inverter 6 in the immediately preceding control cycle, a motor angular velocity detected by the resolver 17, a wheel speed detected by the wheel speed sensor 18, and the like. The vehicle control device 10 calculates a left axle torque deviation obtained by subtracting the estimated left axle torque $T_{LL}$' from the required left axle torque $T_{LL}$ and a right axle torque deviation obtained by subtracting the estimated right axle torque $T_{RL}$' from the required right axle torque $T_{RL}$. Information on the left axle torque deviation and the right axle torque deviation calculated here is transmitted to the calculation unit 11 of the slip setting unit 21.

The sum difference conversion unit 53 calculates a sum mode torque and a difference mode torque of the required left axle torque $T_{LL}$ and the required right axle torque $T_{RL}$. The value of the sum mode torque is, for example, half of the sum of the required left axle torque $T_{LL}$ and the required right axle torque $T_{RL}$. Information on the sum mode torque is transmitted to a sum mode control unit 55 of the damping control unit 54. The value of the difference mode torque is, for example, half a difference between the required left axle torque $T_{LL}$ and the required right axle torque $T_{RL}$. Information on the difference mode torque is transmitted to a difference mode control unit 56 of the damping control unit 54.

The sum mode control unit 55 applies the sum mode torque calculated by the sum difference conversion unit 53 to the sum model M1 for damping control to calculate a sum mode torque in which vibration (for example, sum mode-corresponding vibration of approximately several hertz to ten-odd hertz) that may occur when the vehicle 1 travels straight is suppressed. The difference mode control unit 56 applies the difference mode torque calculated by the sum difference conversion unit 53 to the difference model M2 for damping control to calculate a difference mode torque in which vibration (for example, vibration having a frequency lower than that of vibration corresponding to the sum mode) that may occur during turning of the vehicle 1 is suppressed.

The left-right conversion unit 57 performs calculation of distributing the sum mode torque obtained by the sum mode control unit 55 and the difference mode torque obtained by the difference mode control unit 56 to the left and right motors 2. Here, an instruction torque for damping control to be applied to each of the left motor 2L and the right motor 2R is calculated by the calculation equivalent to the inverse calculation of the sum difference conversion unit 53. For example, a sum of the sum mode torque obtained by the sum mode control unit 55 and the difference mode torque obtained by the difference mode control unit 56 is set as a left motor instruction torque for damping control. A difference between the sum mode torque obtained by the sum mode control unit 55 and the difference mode torque obtained by the difference mode control unit 56 is set as a right motor instruction torque for damping control.

The slip setting unit 21 sets a parameter related to target slip ratios of the left and right wheels 5. Fig. 7 is a block diagram illustrating a specific control example by the slip setting unit 21. The slip setting unit 21 is provided with the above-described calculation unit 11 and limiting unit 12, a left-right calculation unit 36, multipliers 37 and 38, and a sum difference calculation unit 39. The calculation unit 11 includes a sum difference calculation unit 31, a sum mode target slip ratio calculation unit 32, and a difference mode target slip ratio calculation unit 33. The limiting unit 12 is provided with an upper and lower limit setting unit 40, a sum mode target slip ratio limiting unit 34 and a difference mode target slip ratio limiting unit 35.

The sum difference calculation unit 31 calculates a sum model torque deviation equivalent to the sum of the left axle torque deviation and the right axle torque deviation and a difference model torque deviation equivalent to the difference between the left axle torque deviation and the left axle torque deviation. The value of the sum model torque deviation is, for example, half of the sum of the left axle torque deviation and the right axle torque deviation. Information on the sum model torque deviation is transmitted to the sum mode target slip ratio calculation unit 32. The value of the difference model torque deviation is, for example, half the difference between the left axle torque deviation and the right axle torque deviation. Information on the difference model torque deviation is transmitted to the difference mode target slip ratio calculation unit 33.

The sum mode target slip ratio calculation unit 32 calculates a sum mode target slip ratio $y_S$ equivalent to the sum of target values of the slip ratios of the left wheel 5L and the right wheel 5R. Here, the sum mode target slip ratio $y_S$ is calculated based on the required driving force and the estimated driving force of the vehicle 1. For example, the sum mode target slip ratio $y_S$ is calculated based on a value obtained by integrating a value (error) which is obtained by subtracting the estimated driving force from the required driving force. In the present embodiment, the sum mode target slip ratio $y_S$ is calculated based on a value obtained by integrating the sum model torque deviation. Information on the sum mode target slip ratio $y_S$ calculated here is transmitted to the sum mode target slip ratio limiting unit 34.

The difference mode target slip ratio calculation unit 33 calculates a difference mode target slip ratio $y_D$ equivalent to a difference between target values of the slip ratios of the left wheel 5L and the right wheel 5R. Here, the difference mode target slip ratio $y_D$ is calculated based on the required driving force and the estimated driving force of the vehicle 1. For example, the difference mode target slip ratio $y_D$ is calculated based on a value obtained by integrating a value (error) which is obtained by subtracting the estimated driving force from the required driving force. In the present embodiment, the difference mode target slip ratio $y_D$ is calculated based on a value obtained by integrating the difference model torque deviation. Information on the difference mode target slip ratio $y_D$ calculated here is transmitted to the difference mode target slip ratio limiting unit 35.

The upper and lower limit setting unit 40 sets the upper limit values $y_{SH}$, $y_{DH}$ and the lower limit values $y_{SL}$, $y_{DL}$ for each of the sum mode target slip ratio $y_S$ and the difference mode target slip ratio $y_D$. Here, for example, the upper limit values $y_{SH}$, $y_{DH}$ and the lower limit values $y_{SL}$, $y_{DL}$ are set such that the limited sum mode target slip ratio $y_S$ and the limited difference mode target slip ratio $y_D$ output from the limiting unit 12 fall within a slip ratio range simulating the tire grip limits of the left wheel 5L and the right wheel 5R. It is preferable that the values of the upper limit values $y_{SH}$, $y_{DH}$ and the lower limit values $y_{SL}$, $y_{DL}$ are set within the slip ratio range simulating the tire grip limit, but the values can be set to values exceeding the slip ratio range to such an extent that the stability of the vehicle 1 is maintained.

The upper limit values $y_{SH}$, $y_{DH}$ and the lower limit values $y_{SL}$, $y_{DL}$ may be set based on the actual slip ratios (parameters corresponding to the actual slip ratios) of the left wheel 5L and the right wheel 5R. The values may be set based on the target slip ratios (parameters corresponding to the target slip ratios) of the left wheel 5L and the right wheel 5R instead of the actual slip ratios (parameters corresponding to the actual slip ratios). Alternatively, the values may be set based on the required driving force (a parameter corresponding to the required driving force) of the vehicle 1.

For example, the upper limit values $y_{SH}$, $y_{DH}$ and the lower limit values $y_{SL}$, $y_{DL}$ may be set based on a sum mode actual slip ratio $\lambda_S$ and a difference mode actual slip ratio $\lambda_D$. The sum mode actual slip ratio $\lambda_S$ is a parameter corresponding to the sum of the actual slip ratios of the left wheel 5L and the right wheel 5R, and is the actual slip ratio of the sum model M1. Similarly, the difference mode actual slip ratio $\lambda_D$ is a parameter corresponding to a difference between the actual slip ratios of the left wheel 5L and the right wheel 5R, and is the actual slip ratio of the difference model M2.

In addition, the upper limit values $y_{SH}$, $y_{DH}$ and the lower limit values $y_{SL}$, $y_{DL}$ may be set based on the sum mode target slip ratio $y_S$ and the difference mode target slip ratio $y_D$ calculated by the calculation unit 11, or may be set based on the limited sum mode target slip ratio $y_S$ and difference mode target slip ratio $y_D$ that are output from the limiting unit 12. The values may be set based on a required sum mode driving force $F_S$ or a required difference mode driving force $F_D$, or may be set based on the sum mode instruction torque $T_S$ and the difference mode instruction torque $T_D$.

3-1. Setting of upper and lower limit values based on actual slip ratio

The values of the sum mode actual slip ratio $\lambda_S$ and the difference mode actual slip ratio $\lambda_D$ are calculated, for example, based on the following equation. In the formula, $\lambda_R$ is a right wheel actual slip ratio, and $\lambda_L$ is a left wheel actual slip ratio. The sum mode actual slip ratio $\lambda_S$ is, for example, half of the sum of the right wheel actual slip ratio $\lambda_R$ and the left wheel actual slip ratio $\lambda_L$. The difference mode actual slip ratio $\lambda_D$ is, for example, half of a difference between the right wheel actual slip ratio $\lambda_R$ and the left wheel actual slip ratio $\lambda_L$. The right wheel actual slip ratio $\lambda_R$ and the left wheel actual slip ratio $\lambda_L$ are, for example, values obtained by dividing an absolute value of a difference between a reference wheel speed (vehicle body speed in the vicinity of each wheel) and an actual wheel speed for each wheel by the reference wheel speed. The reference wheel speed is calculated based on, for example, a vehicle body speed, a yaw rate, vehicle specifications, and the like at a vehicle center of gravity.

[Math. 3]

Sum mode actual slip ratio $\lambda_S$

$$\lambda_S = \frac{\lambda_R + \lambda_L}{2}$$

Difference mode actual slip ratio $\lambda_D$

$$\lambda_D = \frac{\lambda_R - \lambda_L}{2}$$

[A] Sum mode priority logic

Fig. 8A is a graph showing a method of setting the upper limit value $y_{DH}$ of the difference mode target slip ratio $y_D$ based on the sum mode actual slip ratio $\lambda_S$. In this method, it is assumed that the upper limit value $y_{SH}$ of the sum mode target slip ratio $y_S$ is set to a first predetermined value $y_1$ in advance. The upper limit value $y_{DH}$ of the difference mode target slip ratio $y_D$ is set such that the sum mode target slip ratio $y_S$ and the difference mode target slip ratio $y_D$ fall within a region surrounded by a graph indicated by a solid line, the X axis, and the Y axis in at least Fig. 8A. This region corresponds to a portion of a first quadrant in the "slip ratio range simulating the tire grip limits of the left wheel 5L and the right wheel 5R" described above.

The first predetermined value $y_1$ is a value that is set in advance as a maximum value that the sum mode target slip ratio $y_S$ can take ($0 \leq y_1 \leq 1$). A third predetermined value $y_3$ is a value that is provisionally set as a maximum value that the difference mode target slip ratio $y_D$ can take ($0 \leq y_3 \leq 1$). A second predetermined value $y_2$ is a value that is set in advance as a maximum value that the sum mode target slip ratio $y_S$ can take when the difference mode target slip ratio $y_D$ is the maximum value ($y_3$) ($0 \leq y_2 \leq y_1$). A fourth predetermined value $y_4$ is a value that is set in advance as a maximum value that the difference mode target slip ratio $y_D$ can take when the sum mode target slip ratio $y_S$ is the maximum value ($y_1$) ($0 \leq y_4 \leq y_3$).

When both the second predetermined value $y_2$ and the fourth predetermined value $y_4$ are not 0, the shape of the region surrounded by the graph indicated by the solid line, the X axis, and the Y axis is a pentagonal shape (home base shape) as illustrated in Fig. 8A. When only one of the second predetermined value $y_2$ and the fourth predetermined value $y_4$ is 0, the shape of the region surrounded by the graph indicated by the solid line, the X axis, and the Y axis is a quadrangular shape (trapezoidal shape). When both the second predetermined value $y_2$ and the fourth predetermined value $y_4$ are 0, the shape of the region surrounded by the graph indicated by the solid line, the X axis, and the Y axis is a triangular shape.

The upper and lower limit setting unit 40 assumes a point moving on the graph indicated by the solid line in Fig. 8A, and sets the value of a Y coordinate of a point where an X coordinate corresponds to the sum mode actual slip ratio $\lambda_S$ as the upper limit $y_{DH}$ of the difference mode target slip ratio $y_D$. For example, when the sum mode actual slip ratio $\lambda_S$ is less than the second predetermined value $y_2$, the third predetermined value $y_3$ is output as the upper limit value $y_{DH}$. When the sum mode actual slip ratio $\lambda_S$ is greater than or equal to the second predetermined value $y_2$ and less than the first predetermined value $y_1$, an upper limit value $y_{DH}$ of a magnitude corresponding to the gradient of the graph is output. When the sum mode actual slip ratio $\lambda_S$ is greater than or equal to the first predetermined value $y_1$, the fourth predetermined value $y_4$ is output as the upper limit value $y_{DH}$. The lower limit value $y_{DL}$ of the difference mode target slip ratio $y_D$ is a negative value having the same absolute value as that of the upper limit value $y_{DH}$.

According to such a setting, the upper limit value $y_{DH}$ of the difference mode target slip ratio $y_D$ increases as the sum mode actual slip ratio $\lambda_S$ decreases, and it is allowed to increase the difference mode target slip ratio $y_D$. As the sum mode actual slip ratio $\lambda_S$ increases, the upper limit value $y_{DH}$ of the difference mode target slip ratio $y_D$ decreases, and the difference mode target slip ratio $y_D$ is limited to a small value. Thus, a longitudinal force and a lateral force of wheels are efficiently utilized in driving force control.

A calculation formula relating to the setting of the upper limit value $y_{DH}$ of the difference mode target slip ratio $y_D$ based on the sum mode actual slip ratio $\lambda_S$ will be exemplified below.

[Math. 4]

Case of $\lambda_S<y_2$

$$\text{Upper limit value } y_{DH}=y_3$$

Case of $y_2\leq\lambda_S<y_1$

$$\text{Upper limit value } y_{DH}=\frac{y_4-y_3}{y_1-y_2}\left(\lambda_S-y_2\right)+y_3$$

Case of $y_1\leq\lambda_S$

$$\text{Upper limit value } y_{DH}=y_4$$

[B] Difference mode priority logic

Fig. 8B is a graph showing a method of setting the upper limit value $y_{SH}$ of the sum mode target slip ratio $y_S$ based on the difference mode actual slip ratio $\lambda_D$. In this method, it is assumed that the upper limit value $y_{DH}$ of the difference mode actual slip ratio $\lambda_D$ is set to the third predetermined value $y_3$ in advance.

The upper and lower limit setting unit 40 assumes a point moving on a graph indicated by a solid line in Fig. 8B, and sets the value of an X coordinate of a point where a Y coordinate corresponds to the difference mode actual slip ratio $\lambda_D$ as an upper limit value $y_{SH}$ of the sum mode target slip ratio $y_S$.

For example, when the difference mode actual slip ratio $\lambda_D$ is less than the fourth predetermined value $y_4$, the first predetermined value $y_1$ is output as the upper limit value $y_{SH}$. When the difference mode actual slip ratio $\lambda_D$ is greater than or equal to the fourth predetermined value $y_4$ and less than the third predetermined value $y_3$, an upper limit value $y_{SH}$ of a magnitude according to the gradient of the graph is output. When the difference mode actual slip ratio $\lambda_D$ is greater than or equal to the third predetermined value $y_3$, the second predetermined value $y_2$ is output as the upper limit value $y_{SH}$. The lower limit value $y_{SL}$ of the sum mode target slip ratio $y_S$ is a negative value having the same absolute value as that of the upper limit value $y_{SH}$.

According to such a setting, the upper limit value $y_{SH}$ of the sum mode target slip ratio $y_S$ increases as the difference mode actual slip ratio $\lambda_D$ decreases, and it is allowed to increase the sum mode target slip ratio $y_S$. The upper limit value $y_{SH}$ of the sum mode target slip ratio $y_S$ decreases as the difference mode actual slip ratio $\lambda_D$ increases, and the sum mode target slip ratio $y_S$ is limited to a small value. Thus, a longitudinal force and a lateral force of wheels are efficiently utilized in driving force control.

A calculation formula relating to the setting of the upper limit value $y_{SH}$ of the sum mode target slip ratio $y_S$ based on the difference mode actual slip ratio $\lambda_D$ will be exemplified below.

[Math. 5]

Case of $\lambda_D < y_4$

$$\text{Upper limit value } y_{SH} = y_1$$

Case of $y_4 \leq \lambda_D < y_3$

$$\text{Upper limit value } y_{SH} = \frac{y_2 - y_1}{y_3 - y_4}(\lambda_D - y_4) + y_1$$

Case of $y_3 \leq \lambda_D$

$$\text{Upper limit value } y_{SH} = y_2$$

3-2. Setting of upper and lower limit values based on target slip ratio

The above-described sum mode actual slip ratio $\lambda_S$ can be replaced with the sum mode target slip ratio $y_S$, and the above-described difference mode actual slip ratio $\lambda_D$ can be replaced with the difference mode target slip ratio $y_D$. The values of the sum mode target slip ratio $y_S$ and the difference mode target slip ratio $y_D$ used here may be values calculated by the calculation unit 11 or may be limited values output from the limiting unit 12.

For example, in the graph illustrated in Fig. 8A, the upper limit value $y_{DH}$ of the difference mode target slip ratio $y_D$ may be set by applying the sum mode target slip ratio $y_S$ instead of the sum mode actual slip ratio $\lambda_S$. In the graph illustrated in Fig. 8B, the upper limit value $y_{SH}$ of the sum mode target slip ratio $y_S$ may be set by applying the difference mode target slip ratio $y_D$ instead of the difference mode actual slip ratio $\lambda_D$.

3-3. Setting of upper and lower limit values based on required driving force

The values of the required sum mode driving force Fs and the required difference mode driving force $F_D$ are calculated based on a required left wheel driving force $F_L$ which is a required driving force for the left wheel 5L and a required right wheel driving force $F_R$ which is a required driving force for the right wheel 5R. The value of the required sum mode driving force Fs is, for example, half the sum of the required left wheel driving force $F_L$ and the required right wheel driving force $F_R$, and the value of the required difference mode driving force $F_D$ is, for example, half the difference between the required left wheel driving force $F_L$ and the required right wheel driving force $F_R$. Each of the required left wheel driving force $F_L$ and the required right wheel driving force $F_R$ is calculated based on, for example, an accelerator opening degree, a brake pedal stroke, a steering angle, a vehicle speed, a road surface inclination, a yaw rate, and the like.

Fig. 9A is a graph showing a method of setting the upper limit value $y_{SH}$ of the sum mode target slip ratio $y_S$ and the upper limit value $y_{DH}$ of the difference mode target slip ratio $y_D$ based on the required sum mode driving force $F_S$ and the required difference mode driving force $F_D$. The upper and lower limit setting unit 40 assumes a straight line having an inclination equal to "a ratio (driving force ratio) of the required difference mode driving force $F_D$ to the required sum mode driving force $F_S$" and passing through the origin in the coordinate system illustrated in Fig. 9A. An X coordinate of an intersection between the straight line and a solid line graph in Fig. 9A is set as the upper limit value $y_{SH}$ of the sum mode target slip ratio $y_S$, and a Y coordinate of the intersection is set as the upper limit value $y_{DH}$ of the difference mode target slip ratio $y_D$. Here, when the "ratio of the upper limit value $y_{DH}$ of the difference mode target slip ratio $y_D$ to the upper limit value $y_{SH}$ of the sum mode target slip ratio $y_S$" is defined as an upper limit value ratio, the upper and lower limit setting unit 40 sets the two upper limit values $y_{SH}$ and $y_{DH}$ so that the upper limit value ratio coincides with the driving force ratio.

According to such a setting, the upper limit value $y_{SH}$ of the sum mode target slip ratio $y_S$ increases and the upper limit value $y_{DH}$ of the difference mode target slip ratio $y_D$ decreases as the required difference mode driving force $F_D$ becomes relatively smaller (that is, as the driving force ratio becomes smaller). Thereby, the sum mode target slip ratio $y_S$ is easily allowed to be increased, and the difference mode target slip ratio $y_D$ is easily limited to a small value.

In contrast, as the required difference mode driving force $F_D$ becomes relatively larger (that is, as the driving force ratio becomes larger), the upper limit value $y_{DH}$ of the difference mode target slip ratio $y_D$ increases and the upper limit value $y_{SH}$ of the sum mode target slip ratio $y_S$ decreases. Thereby, the difference mode target slip ratio $y_D$ is easily allowed to be increased, and the sum mode target slip ratio $y_S$ is easily limited to a small value. In any case, a longitudinal force and a lateral force of wheels can be efficiently utilized in driving force control.

A calculation formula relating to the setting of the upper limit values $y_{SH}$ and $y_{DH}$ based on the required sum mode driving force $F_S$ and the required difference mode driving force $F_D$ will be exemplified below.

[Math. 6]

Case of $\frac{y_3}{y_2} \leq \frac{F_D}{F_S}$

$$\text{Upper limit value } y_{SH}=y_3\frac{F_S}{F_D}, \text{ Upper limit value } y_{DH}=y_3$$

Case of $\frac{y_4}{y_1} \leq \frac{F_D}{F_S} < \frac{y_3}{y_2}$

$$\text{Upper limit value } y_{SH}=\frac{\left\{y_3-y_2\left(\frac{y_4-y_3}{y_1-y_2}\right)\right\}}{\left\{\frac{F_D}{F_S}-\left(\frac{y_4-y_3}{y_1-y_2}\right)\right\}}, \text{ Upper limit value } y_{DH}=y_{SH}\frac{F_D}{F_S}$$

Case of $\frac{F_D}{F_S} < \frac{y_4}{y_1}$

$$\text{Upper limit value } y_{SH}=y_1, \text{ Upper limit value } y_{DH}=y_1\frac{F_D}{F_S}$$

The example illustrated in Fig. 9B is a graph showing a setting method when two upper limit values $y_{SH}$ and $y_{DH}$ are set such that the upper limit value ratio is proportional to the driving force ratio. In this example, the two upper limit values $y_{SH}$ and $y_{DH}$ are set such that the upper limit value ratio does not completely coincide with the driving force ratio but coincides with the product of a predetermined coefficient k (proportional constant) and the driving force ratio. Thereby, the upper limit value ratio increases as the driving force ratio increases, and the upper limit value ratio decreases as the driving force ratio decreases. The value of the coefficient k may be a preset fixed value, or may be a variable value that varies depending on a traveling state of the vehicle 1 or a driver's operation. A case where the value of the coefficient k is 1 corresponds to the example illustrated in Fig. 9A.

The upper and lower limit setting unit 40 assumes a straight line having an inclination equal to "a product of the predetermined coefficient k and a ratio (driving force ratio) of the required difference mode driving force $F_D$ to the required sum mode driving force $F_S$" and passing through the origin in the coordinate system illustrated in Fig. 9B. An X coordinate of an intersection between the straight line and a solid line graph in Fig. 9B is set as the upper limit value $y_{SH}$ of the sum mode target slip ratio $y_S$, and a Y coordinate of the intersection is set as the upper limit value $y_{DH}$ of the difference mode target slip ratio $y_D$. Even in such a setting, a longitudinal force and a lateral force of wheels can be efficiently utilized in driving force control. By changing the value of the coefficient k, a balance between the sum mode target slip ratio $y_S$ and the difference mode target slip ratio $y_D$ can be adjusted.

For example, when k is set to a value smaller than 1, the inclination of the straight line in Fig. 9B becomes smaller. That is, the upper limit value $y_{SH}$ of the sum mode target slip ratio $y_S$ is likely to increase, and the upper limit value $y_{DH}$ of the difference mode target slip ratio $y_D$ is likely to decrease. Thereby, it is possible to achieve slip control in which acceleration/deceleration performance (motion performance in a straight advancing direction) is emphasized. When k is set to 0, a behavior similar to the above-described sum mode priority logic is obtained.

When k is set to a value larger than 1, the inclination of the straight line in Fig. 9B becomes larger. That is, the upper limit value $y_{DH}$ of the difference mode target slip ratio $y_D$ is likely to increase, and the upper limit value $y_{SH}$ of the sum mode target slip ratio $y_S$ is likely to decrease. Thereby, it is possible to achieve slip control in which turning performance (motion performance in a turning direction) is emphasized. When k is set to infinity (the maximum value allowed in control), a behavior similar to the above-described difference mode priority logic is obtained.

A calculation formula relating to the setting of the upper limit values $y_{SH}$ and $y_{DH}$ based on the driving force ratio ($F_D/F_S$) and the coefficient k will be exemplified below.

[Math. 7]

Case of $\frac{y_3}{y_2} \leq k \frac{F_D}{F_S}$

$$\text{Upper limit value } y_{SH} = y_3 \frac{F_S}{k \cdot F_D}, \text{ Upper limit value } y_{DH} = y_3$$

Case of $\frac{y_4}{y_1} \leq k \frac{F_D}{F_S} < \frac{y_3}{y_2}$

$$\text{Upper limit value } y_{SH} = \frac{\left\{ y_3 - y_2 \left( \frac{y_4 - y_3}{y_1 - y_2} \right) \right\}}{\left\{ k \cdot \frac{F_D}{F_S} - \left( \frac{y_4 - y_3}{y_1 - y_2} \right) \right\}}, \text{ Upper limit value } y_{DH} = k \cdot y_{SH} \frac{F_D}{F_S}$$

Case of $k \frac{F_D}{F_S} < \frac{y_4}{y_1}$

$$\text{Upper limit value } y_{SH} = y_1, \text{ Upper limit value } y_{DH} = k \cdot y_1 \frac{F_D}{F_S}$$

3-4. Setting of upper and lower limit values based on required torque

The above-described required sum mode driving force $F_S$ can be replaced with a sum mode torque, and the above-described required difference mode driving force $F_D$ can be replaced with a difference mode torque. The values of the sum mode torque and the difference mode torque used here may be values calculated by the sum difference conversion unit 53 or may be values calculated based on the required left axle torque $T_{LL}$ and the required right axle torque $T_{RL}$ set by the required driving force setting unit 51.

For example, in the graph illustrated in Fig. 9A, a straight line having an inclination equal to the "ratio (torque ratio) of the difference mode torque to the sum mode torque" and passing through the origin may be assumed, and an X coordinate and a Y coordinate of an intersection between the straight line and the solid line graph in Fig. 9A may be set as the upper limit values $y_{SH}$ and $_{YDH}$. The same applies to the graph illustrated in Fig. 9B, and two upper limit values $y_{SH}$ and $y_{DH}$ may be set such that the upper limit value ratio is proportional to the torque ratio.

The sum mode target slip ratio limiting unit 34 limits the value of the sum mode target slip ratio $y_S$ so that the sum mode target slip ratio $y_S$ falls within a range from the lower limit value $y_{SL}$ to the upper limit value $y_{SH}$ based on the information on the upper limit value $y_{SH}$ and the lower limit value $y_{SL}$ of the sum mode target slip ratio $y_S$ set by the upper and lower limit setting unit 40. When the value of the sum mode target slip ratio $y_S$ calculated by the calculation unit 11 (sum mode target slip ratio calculation unit 32) exceeds the upper limit value $y_{SH}$, the value is replaced with the upper limit value $y_{SH}$ and output from the sum mode target slip ratio limiting unit 34. In contrast, when the value of the sum mode target slip ratio $y_S$ is less than the lower limit value $y_{SL}$, the value is replaced with the lower limit value $y_{SL}$ and output from the sum mode target slip ratio limiting unit 34. When the value of the sum mode target slip ratio $y_S$ is greater than or equal to the lower limit value $y_{SL}$ and less than or equal to the upper limit value $y_{SH}$, the intact value is output from the sum mode target slip ratio limiting unit 34.

Similarly, the difference mode target slip ratio limiting unit 35 limits the value of the difference mode target slip ratio $y_D$ so that the difference mode target slip ratio $y_D$ falls within the range from the lower limit value $y_{DL}$ to the upper limit value $y_{DH}$ based on the information on the upper limit value $y_{DH}$ and the lower limit value $y_{DL}$ of the difference mode target slip ratio $y_D$ set by the upper and lower limit setting unit 40. When the value of the difference mode target slip ratio $y_D$ calculated by the calculation unit 11 (difference mode target slip ratio calculation unit 33) exceeds the upper limit value $y_{DH}$, the value is replaced with the upper limit value $y_{DH}$ and output from the difference mode target slip ratio limiting unit 35. In contrast, when the value of the difference mode target slip ratio $y_D$ is less than the lower limit value $y_{DL}$, the value is replaced with the lower limit value $y_{DL}$ and output from the difference mode target slip ratio limiting unit 35. When the value of the difference mode target slip ratio $y_D$ is greater than or equal to the lower limit value $y_{DL}$ and less than or equal to the upper limit value $y_{DH}$, the intact value is output from the difference mode target slip ratio limiting unit 35.

The left-right calculation unit 36 performs calculation to convert the sum mode target slip ratio $y_S$ obtained by the sum mode target slip ratio limiting unit 34 and the difference mode target slip ratio $y_D$ obtained by the difference mode target slip ratio limiting unit 35 into target slip ratios of the left and right wheels 5. For example, a difference between the sum mode target slip ratio $y_S$ and the difference mode target slip ratio $y_D$ is set as a target slip ratio $y_R$ of the right wheel 5R and transmitted to the multiplier 37. The sum of the sum mode target slip ratio $y_S$ and the difference mode target slip ratio $y_D$ is set as a target slip ratio $y_L$ of the left wheel 5L and transmitted to the multiplier 38.

The multiplier 37 calculates the product of the target slip ratio $y_R$ output from the left-right calculation unit 36 and the reference wheel speed of the right wheel 5R, and outputs the value to the sum difference calculation unit 39. The multiplier 38 calculates the product of the target slip ratio $y_L$ output from the left-right calculation unit 36 and the reference wheel speed of the left wheel 5L, and outputs the value to the sum difference calculation unit 39.

The sum difference calculation unit 29 calculates a sum mode target wheel speed and a difference mode target wheel speed based on the two values output from the multipliers 37 and 38. The sum mode target wheel speed is, for example, half the sum of the two values output from the multipliers 37 and 38, and the difference mode target wheel speed is, for example, half a difference between the two values output from the multipliers 37 and 38. Information on the sum mode target wheel speed is transmitted to the sum mode control unit 22 of the control unit 13, and information on the difference mode target wheel speed is transmitted to the difference mode control unit 23 of the control unit 13.

The sum mode control unit 22 calculates a sum mode torque for optimizing a slip ratio when the vehicle 1 travels straight by applying the sum mode target wheel speed obtained by the slip setting unit 21 to the sum model M1 for slip control. The difference mode control unit 23 calculates a difference mode torque for optimizing a slip ratio during turning of the vehicle 1 by applying the difference mode target wheel speed obtained by the slip setting unit 21 to the difference model M2 for slip control.

Similarly to the left-right conversion unit 57, the left-right conversion unit 24 performs calculation of distributing the sum mode torque obtained by the sum mode control unit 22 and the difference mode torque obtained by the difference mode control unit 23 to the left and right motors 2. For example, a sum of the sum mode torque and the difference mode torque is set as a left motor instruction torque for slip control, and a difference between the sum mode torque and the difference mode torque is set as a right motor instruction torque for slip control.

The final left motor instruction torque $T_{LM}$ is obtained by adding the left motor instruction torque for damping control obtained by the left-right conversion unit 57 and the left motor instruction torque for slip control obtained by the left-right conversion unit 24. Similarly, the final right motor instruction torque $T_{RM}$ is obtained by adding the right motor instruction torque for damping control obtained by the left-right conversion unit 57 and the right motor instruction torque for slip control obtained by the left-right conversion unit 24.

4. Effect

(1) In the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted, the vehicle control device 10 according to the present embodiment controls driving forces of the left drive system and the right drive system. The vehicle control device 10 includes the sum model M1 obtained by modeling motion states of the left drive system and the right drive system during straight traveling, and the difference model M2 obtained by modeling motion states of the left drive system and the right drive system during turning.

The vehicle control device 10 includes the calculation unit 11, the limiting unit 12, and the control unit 13. The calculation unit 11 calculates the sum mode target slip ratio $y_S$ equivalent to the sum of the target values of the slip ratios of the left wheel 5L and the right wheel 5R and the difference mode target slip ratio $y_D$ equivalent to the difference between the target values of the slip ratios. The limiting unit 12 sets the upper limit values $y_{SH}$, $y_{DH}$ and the lower limit values $y_{SL}$, $y_{DL}$ of the sum mode target slip ratio $y_S$ and the difference mode target slip ratio $y_D$ to limit the sum mode target slip ratio $y_S$ and the difference mode target slip ratio $y_D$. The control unit 13 controls the driving forces of the left drive system and the right drive system, based on the sum mode target slip ratio $y_S$ and the difference mode target slip ratio $y_D$, which are limited by the limiting unit 12, and the sum model M1 and the difference model M2.

With such a configuration, for example, as illustrated in Figs. 8A and 8B, the sum mode target slip ratio $y_S$ and the difference mode target slip ratio $y_D$ can be easily kept within a slip ratio range, and a target slip ratio at which a longitudinal force and a lateral force of wheels are efficiently utilized can be set. In the above-described example, the upper limit values $y_{SH}$, $y_{DH}$ and the lower limit values $y_{SL}$, $y_{DL}$ are set such that the sum mode target slip ratio $y_S$ and the difference mode target slip ratio $y_D$ fall within the slip ratio ranges simulating the tire grip limits of the left wheel 5L and the right wheel 5R. Thereby, the sum mode target slip ratio $y_S$ and the difference mode target slip ratio $y_D$ can be reliably kept within the slip ratio ranges.

According to the above configuration, the difference mode target slip ratio $y_D$ decreases as the sum mode target slip ratio $y_S$ increases, and the difference mode target slip ratio $y_D$ increases as the sum mode target slip ratio $y_S$ decreases. Thus, the target slip ratios of the right and left wheels 5 can be comprehensively changed, and controllability regarding a balance between the longitudinal force and the lateral force of the wheels can be improved. The balance between the longitudinal force and the lateral force will be described in detail.

Fig. 10A is a graph showing a relationship between an actual slip ratio and a longitudinal force [a longitudinal component of a frictional force acting on a wheel (a circumferential component of the wheel)] during turning of the vehicle 1. In Fig. 10A, for example, a relationship between an actual slip ratio and a longitudinal force obtained when the magnitude of a side slip angle that changes depending on a rotation angle of a steering wheel is changed in four stages is illustrated by four graphs. A graph of a thick solid line corresponds to a case where the side slip angle is relatively small, and a graph of a thin broken line corresponds to a case where the side slip angle is relatively large. Fig. 10B is a graph showing a relationship between an actual slip ratio and a lateral force [a lateral component of a frictional force acting on a wheel (a component in a direction orthogonal to the circumferential direction of the wheel)] during turning of the vehicle 1. Fig. 10B also shows four graphs corresponding to respective cases where the magnitude of the side slip angle is changed in four stages.

As illustrated in Fig. 10A, when the actual slip ratio is increased from $\lambda_1$ to $\lambda_2$ in a turning state (for example, the graph of the thin broken line) in which the side slip angle is large to some extent, the longitudinal force increases from $F_{X1}$ to $F_{X2}$. On the other hand, as illustrated in Fig. 10B, the lateral force decreases from $F_{Y1}$ to $F_{Y2}$ by increasing the actual slip ratio from $\lambda_1$ to $\lambda_2$ in a turning state (for example, the graph of the thin broken line) in which the side slip angle is large to some extent.

Here, when points corresponding to the longitudinal forces $F_{X1}$ and $F_{X2}$ in Fig. 10A are plotted by white circles in Fig. 10B, it can be seen that a magnitude relationship between the longitudinal force and the lateral force is reversed by changing the actual slip ratio from $\lambda_1$ to $\lambda_2$. That is, when the actual slip ratio is $\lambda_1$, the lateral force is larger than the longitudinal force ($F_{X1} < F_{Y1}$), whereas when the actual slip ratio is $\lambda_2$, the longitudinal force is larger than the lateral force ($F_{Y2} < F_{X2}$).

Thus, when the upper limit value $y_{SH}$ of the sum mode target slip ratio $y_S$ is set to be large (the lower limit value $y_{SL}$ is set to be small), the absolute value of the actual slip ratio is allowed to be a larger value, and an increase in the longitudinal force and a decrease in the lateral force are easily promoted. In other words, it is possible to change a balance between the longitudinal force and the lateral force of the wheels by making the upper limit value $y_{SH}$ and the lower limit value $y_{SL}$ of the sum mode target slip ratio $y_S$ variable. Thereby, for example, the driver can step on the accelerator pedal to increase the actual slip ratio, increase the longitudinal force, and decrease the lateral force, and it is possible to achieve a desired turning state (for example, a drift state) as the driver desires. When the actual slip ratio is reduced by releasing the accelerator pedal, it is possible to increase the lateral force and decrease the longitudinal force, and a turning state (for example, a grip state) intended by the driver can be achieved at will.

(2) The limiting unit 12 of the present embodiment can set the upper limit values $y_{SH}$, $y_{DH}$ and the lower limit values $y_{SL}$, $y_{DL}$ based on the actual slip ratios of the left wheel 5L and the right wheel 5R. Thereby, the actual slip state of the right and left wheels 5 can be reflected in the upper limit values $y_{SH}$, $y_{DH}$ and the lower limit values $y_{SL}$, $y_{DL}$. Thus, it is possible to accurately set a target slip ratio at which the longitudinal force and the lateral force of the wheels are efficiently utilized, and it is possible to further improve controllability regarding a balance between the longitudinal force and the lateral force of the wheels.

(3) For example, as illustrated in Fig. 8B, the limiting unit 12 of the present embodiment can set the upper limit value $y_{SH}$ and the lower limit value $y_{SL}$ of the sum mode target slip ratio $y_S$ based on the difference mode actual slip ratio $\lambda_D$ that is the actual slip ratio of the difference model M2 corresponding to a difference between the actual slip ratios of the left wheel 5L and the right wheel 5R. Thereby, the difference mode actual slip ratio $\lambda_D$ can be reflected in the sum mode target slip ratio $y_S$, and it is possible to achieve slip control in which turning performance (motion performance in a turning direction) is emphasized.

(4) For example, as illustrated in Fig. 8A, the limiting unit 12 of the present embodiment can set the upper limit value $y_{DH}$ and the lower limit value $y_{DL}$ of the difference mode target slip ratio $y_D$ based on the sum mode actual slip ratio $\lambda_S$ that is the actual slip ratio of the sum model M1 corresponding to the sum of the actual slip ratios of the left wheel 5L and the right wheel 5R. Thereby, the sum mode actual slip ratio $\lambda_S$ can be reflected in the difference mode target slip ratio $y_D$, and it is possible to achieve slip control in which acceleration/deceleration performance (motion performance in a straight advancing direction) is emphasized.

(5) The limiting unit 12 of the present embodiment can set the upper limit values $y_{SH}$, $y_{DH}$ and the lower limit values $y_{SL}$, based on the target slip ratios of the left wheel 5L and the right wheel 5R. Thereby, it is possible to set the upper limit values $y_{SH}$, $y_{DH}$ and the lower limit values $y_{SL}$, without specifying the actual slip state of the right and left wheels 5. Thus, it is possible to accurately set a target slip ratio at which the longitudinal force and the lateral force of the wheels are efficiently utilized with a simple control configuration, and it is possible to further improve controllability regarding a balance between the longitudinal force and the lateral force of the wheels.

(6) For example, as illustrated in Fig. 9A, the limiting unit 12 of the present embodiment can set the upper limit values $y_{SH}$, $y_{DH}$ and the lower limit values $y_{SL}$, $y_{DL}$ based on the required driving force of the vehicle 1. Thereby, the actual driving force transmitted to the right and left wheels 5 can be reflected in the setting of the upper limit values $y_{SH}$, $y_{DH}$ and the lower limit values $y_{SL}$, $y_{DL}$. Thus, it is possible to accurately set a target slip ratio at which the longitudinal force and the lateral force of the wheels are efficiently utilized, and it is possible to further improve controllability regarding a balance between the longitudinal force and the lateral force of the wheels.

(7) The limiting unit 12 of the present embodiment can set the upper limit values $y_{SH}$, $y_{DH}$ and the lower limit values $y_{SL}$, $y_{DL}$ based on a driving force ratio that is a ratio between the required sum mode driving force $F_S$ equivalent to the sum of the required driving forces in the left wheel 5L and the right wheel 5R and the required difference mode driving force $F_D$ equivalent to the difference between the required driving forces in the left wheel 5L and the right wheel 5R. Thereby, the driving force ratio can be reflected in the setting of the upper limit values $y_{SH}$, $y_{DH}$ and the lower limit values $y_{SL}$, $y_{DL}$. Thus, it is possible to accurately set a target slip ratio at which the longitudinal force and the lateral force of the wheels are efficiently utilized, and it is possible to further improve controllability regarding a balance between the longitudinal force and the lateral force of the wheels.

(8) For example, as illustrated in Fig. 9B, the limiting unit 12 of the present embodiment can cause the upper limit value ratio, which is a ratio between the upper limit value $y_{SH}$ of the sum mode target slip ratio $y_S$ and the upper limit value $y_{DH}$ of the difference mode target slip ratio $y_D$, to be proportional to the driving force ratio. In this case, the characteristics (tuning) of slip control can be changed in accordance with a coefficient k equivalent to a proportional constant. For example, by setting the coefficient k to be small, it is possible to achieve slip control in which acceleration/deceleration performance (motion performance in a straight advancing direction) is emphasized. In addition, by setting the coefficient k to be large, it is possible to achieve slip control in which turning performance (motion performance in a turning direction) is emphasized.

(9) The limiting unit 12 of the present embodiment can change the proportional constant k of the upper limit ratio with respect to the driving force ratio in accordance with a traveling state of the vehicle 1 or a driver's operation. Thereby, it is possible to change the characteristics (tuning) of the slip control in accordance with the traveling state and the driver's operation, and it is possible to further improve controllability and convenience.

5. Others

The foregoing embodiment is merely exemplary and is not intended to exclude the application of various modifications and techniques which are not explicitly described in the present embodiment. Each configuration according to the present embodiment can be modified in various ways without departing from the gist of the present embodiment. Each configuration according to the present embodiment can be selected as necessary or can be combined as appropriate.

In the above embodiment, the vehicle control device 10 applied to the rear wheel of the vehicle 1 has been exemplified. However, a similar vehicle control device may be applied to the front wheel, or a similar vehicle control device may be applied to both the front and rear wheels. At least in the vehicle 1 including the vehicle control device 10 that controls driving forces of the left drive system and the right drive system, it is possible to achieve the same effects as those of the above embodiment by performing the same control as that of the above embodiment.

In the above-described embodiment, a ratio of the required difference mode driving force $F_D$ to the required sum mode driving force $F_S$ is defined as a driving force ratio, but a ratio of the required sum mode driving force Fs to the required difference mode driving force $F_D$ may be defined as a driving force ratio. In this case, when the definition of the upper limit value ratio is a "ratio of the upper limit value $y_{SH}$ of the sum mode target slip ratio $y_S$ to the upper limit value $y_{DH}$ of the difference mode target slip ratio $y_D$", the same control as the control according to Figs. 9A and 9B can be achieved. In the above-described embodiment, the control for a slip ratio has been described in detail, but a speed difference between the vehicle body and the wheel (for example, a difference between a reference vehicle body speed and a wheel speed) may be set as a control target instead of the slip ratio.

In implementing the vehicle control device according to the present invention, a driving force control method described in the following references can be referred to.

·Hiroshi Fujimoto, Takeshi Takano, Hidetoshi Nobumoto, and Toshimi Okazaki, "Driving Force Control Method Based on High Accuracy Slip Ratio Control", Mazda Technical Review, No. 32, pp. 228-233 (2015).

·Hiroshi Fujimoto, Junya Amada, and Takayuki Miyajima, "Development and Control of an Electric Vehicle with Variable Drive Unit System", Proceedings of the 2013 JSAE Annual Spring Congress, No. 8-13, pp. 17-20 (2013).

·Masataka Yoshimura and Hiroshi Fujimoto, "Driving Torque Control Method for Electric Vehicle with In-Wheel Motors", IEEJ Transactions on Industry Applications (D), Vol. 131, No. 5, pp. 721-728 (2011).

[Industrial Applicability]

The present invention can be used in the manufacturing industry of a vehicle control device mounted on a vehicle, and can also be used in the manufacturing industry of a vehicle on which a vehicle control device is mounted.

[Reference Signs List]

| | |
|---|---|
| 1 | Vehicle |
| 2 | Motor |
| 3 | Power distribution mechanism |
| 4 | Axle |
| 4L | Left axle |
| 4R | Right axle |
| 5 | Left and right wheels |
| 5L | Left wheel |
| 5R | Right wheel |
| 6 | Inverter |
| 7 | Battery |
| 10 | Vehicle control device |
| 11 | Calculation unit |
| 12 | Limiting unit |
| 13 | Control unit |
| 14 | Accelerator opening sensor |
| 15 | Brake sensor |
| 16 | Steering angle sensor |
| 17 | Resolver |
| 18 | Wheel speed sensor |
| 21 | Slip setting unit |
| 22 | Sum mode control unit |
| 23 | Difference mode control unit |
| 24 | Left-right conversion unit |
| 31 | Sum difference calculation unit |
| 32 | Sum mode target slip ratio calculation unit |
| 33 | Difference mode target slip ratio calculation unit |
| 34 | Sum mode target slip ratio limiting unit |
| 35 | Difference mode target slip ratio limiting unit |
| 36 | Left-right calculation unit |
| 37 | Multiplier |
| 38 | Multiplier |
| 39 | Sum difference calculation unit |
| 40 | Upper and lower limit setting unit |
| 51 | Required driving force setting unit |
| 52 | Estimated driving force observer |
| 53 | Sum difference conversion unit |
| 54 | Damping control unit |
| 55 | Sum mode control unit |
| 56 | Difference mode control unit |
| 57 | Left-right conversion unit |
| M1 | Sum model |
| M2 | Difference model |
| $y_S$ | Sum mode target slip ratio |
| $y_D$ | Difference mode target slip ratio |

**Claims**

**1.** A vehicle control device that controls driving forces of a left drive system and a right drive system in a vehicle including the left drive system including a left axle and a left wheel to which power is transmitted from a left drive source, and the right drive system including a right axle and a right wheel to which power is transmitted from a right drive source, the vehicle control device comprising:

a sum model that is obtained by modeling motion states of the left drive system and the right drive system during straight traveling;
a difference model that is obtained by modeling motion states of the left drive system and the right drive system during turning;
a calculation unit that calculates a sum mode target slip ratio equivalent to a sum of target values of slip ratios of the left wheel and the right wheel and a difference mode target slip ratio equivalent to a difference between the target values of the slip ratios;
a limiting unit that sets an upper limit value and a lower limit value of each of the sum mode target slip ratio and the difference mode target slip ratio to limit the sum mode target slip ratio and the difference mode target slip ratio; and
a control unit that controls the driving forces of the left drive system and the right drive system based on the sum mode target slip ratio and the difference mode target slip ratio, which are limited by the limiting unit, and the sum model and the difference model.

**2.** The vehicle control device according to claim 1, wherein
the limiting unit sets the upper limit value and the lower limit value based on actual slip ratios of the left wheel and the right wheel.

**3.** The vehicle control device according to claim 2, wherein
the limiting unit sets the upper limit value and the lower limit value of the sum mode target slip ratio, based on a difference mode actual slip ratio which is an actual slip ratio of the difference model corresponding to a difference between the actual slip ratios of the left wheel and the right wheel.

**4.** The vehicle control device according to claim 2, wherein
the limiting unit sets the upper limit value and the lower limit value of the difference mode target slip ratio, based on a sum mode actual slip ratio which is an actual slip ratio of the sum model corresponding to a sum of the actual slip ratios of the left wheel and the right wheel.

**5.** The vehicle control device according to claim 1, wherein
the limiting unit sets the upper limit value and the lower limit value based on target slip ratios of the left wheel and the right wheel.

**6.** The vehicle control device according to claim 1, wherein
the limiting unit sets the upper limit value and the lower limit value based on a required driving force of the vehicle.

**7.** The vehicle control device according to claim 6, wherein
the limiting unit sets the upper limit value and the lower limit value based on a driving force ratio which is a ratio between a required sum mode driving force equivalent to a sum of required driving forces of the left wheel and the right wheel and a required difference mode driving force equivalent to a difference between required driving forces of the left wheel and the right wheel.

**8.** The vehicle control device according to claim 7, wherein
the limiting unit causes an upper limit value ratio, which is a ratio between the upper limit value of the sum mode target slip ratio and the upper limit value of the difference mode target slip ratio, to be proportional to the driving force ratio.

**9.** The vehicle control device according to claim 8, wherein
the limiting unit changes a proportional constant of the upper limit value ratio with respect to the driving force ratio in accordance with a traveling state of the vehicle or a driver’s operation.

**10.** A vehicle control method of controlling driving forces of a left drive system and a right drive system in a vehicle including the left drive system including a left axle and a left wheel to which power is transmitted from a left drive source, and the right drive system including a right axle and a right wheel to which power is transmitted from a right drive source, the vehicle control method comprising:

preparing a sum model that is obtained by modeling motion states of the left drive system and the right drive system during straight traveling, and a difference model that is obtained by modeling motion states of the left drive system and the right drive system during turning;
calculating a sum mode target slip ratio equivalent to a sum of target values of slip ratios of the left wheel and the right wheel and a difference mode target slip ratio equivalent to a difference between the target values of the slip ratios;
setting an upper limit value and a lower limit value of each of the sum mode target slip ratio and the difference mode target slip ratio to limit the sum mode target slip ratio and the difference mode target slip ratio; and
controlling the driving forces of the left drive system and the right drive system based on the limited sum mode target slip ratio and difference mode target slip ratio, the sum model, and the difference model.

Fig. 1

Right
Front
Rear
Left
1
10
Vehicle control device
Sum model
Difference model
M1
M2
Calculation unit
11
Limiting unit
12
Control unit
13
14
15
16
17 (17R)
18 (18R)
5 (5R)
6 (6R)
4 (4R)
2 (2R)
3
2 (2L)
4 (4L)
7
6 (6L)
5 (5L)
17 (17L)
18 (18L)

Fig. 2

3
G
G
$J_M$
$J_M$
$T_{LM}$
$\omega_{LM}$
$T_{RM}$
$\omega_{RM}$
2L
2R
$T_{Lm}$
$\omega_{Lm}$
$T_{Rm}$
$\omega_{Rm}$
$J_w$
$J_w$
$b_1+1$
$T_{Lds}$
$T_{Lin}$
$T_{Rin}$
$b_1$
$T_{Rds}$
5L
5R
$\omega_{Lds}$
$b_2$
$b_2+1$
$\omega_{Rds}$
$T_{LL}$
$\omega_{LL}$
$T_{RL}$
$\omega_{RL}$

Fig. 3

Angular velocity
ωLm
ωLds
ωRds
ωRm
b2
1
b1
TRin
TLin
TLm
TRm
Gear ratio

Fig. 4

$\dot{\omega}_{LL}$
$J_{Lw}$
4L
2L
3
2R
4R
$\dot{\omega}_{RL}$
$J_{Rw}$
$K_S$
$K_S$
5L
$\dot{\omega}_{Lds}$
$J_{LM}$
$\dot{\omega}_{Rds}$
$J_{RM}$
5R
$D_S$
Driving side
$D_S$
Load side
Load side

Fig. 5 A

Sum model (Two-inertia system model)

$\dot{\omega}_{Sds}$
$\dot{\omega}_{SL}$
$T_{Sds}$
$T_{Sds}$
$T_{Sin}$
$J_{SM}$
$J_{SL}$
$T_{SL}$
$K_S, D_S$

$J_{SM} = G^2 \cdot J_M$

Fig. 5 B

Difference model (Two-inertia system model)

$\dot{\omega}_{Dds}$
$\dot{\omega}_{DL}$
$T_{Dds}$
$T_{Dds}$
$T_{Din}$
$J_{DM}$
$J_{DL}$
$T_{DL}$
$K_S, D_S$

$J_{DM} = (2b+1)^2 \cdot G^2 \cdot J_M$

Fig. 6

54
Damping control unit
53
55
57
Sum difference conversion unit
Sum mode control unit
Left-right conversion unit
Difference mode control unit
56
21
Slip setting unit
Control unit (Slip control unit)
13
11
12
22
24
Required driving force setting unit
Required left axle torque
$T_{LL}$
Required right axle torque
$T_{RL}$
Calculation unit
Limiting unit
Sum mode control unit
Difference mode control unit
Left-right conversion unit
Left motor instruction torque
$T_{LM}$
Right motor instruction torque
$T_{RM}$
51
23
Estimated left axle torque
Estimated driving force observer
Estimated right axle torque
52

Fig. 7

21
Slip setting unit
Sum mode actual slip ratio $\lambda_S$
Difference mode actual slip ratio $\lambda_D$
Required sum mode driving force $F_S$
Required difference mode driving force $F_D$
40
Upper and lower limit setting unit
Sum mode target slip ratio $y_S$
Difference mode target slip ratio $y_D$
36
39
34
Left axle torque deviation
31
32
Sum mode target slip ratio calculation unit
$y_S$
Sum mode target slip ratio limiting unit
Left-right calculation unit
37
Sum difference calculation unit
Sum mode target wheel speed
Right axle torque deviation
Sum difference calculation unit
Difference mode target slip ratio calculation unit
$y_D$
Difference mode target slip ratio limiting unit
38
Difference mode target wheel speed
Calculation unit
33
Limiting unit
35
11
12
Left axle reference wheel speed
Right axle reference wheel speed

Fig. 8 A

Difference mode target slip ratio $y_D$
$y_3$
$y_{DH}$
$y_4$
0
$y_2$
$\lambda_S$
$y_1$
Sum mode target slip ratio $y_S$
$y_1$ First predetermined value (maximum value that the sum mode target slip ratio can take)
$y_2$ Second predetermined value (set in advance)
$y_3$ Third predetermined value (maximum value that the difference mode target slip ratio can take)
$y_4$ Fourth predetermined value (set in advance)
$\lambda_S$ Sum mode actual slip ratio
$y_{DH}$ Upper limit value of the difference mode target slip ratio

Fig. 8 B

Difference mode target slip ratio $y_D$
$y_3$
$\lambda_D$
$y_4$
0
$y_2$
$y_{SH}$
$y_1$
Sum mode target slip ratio $y_S$
$y_1$ First predetermined value (maximum value that the sum mode target slip ratio can take)
$y_2$ Second predetermined value (set in advance)
$y_3$ Third predetermined value (maximum value that the difference mode target slip ratio can take)
$y_4$ Fourth predetermined value (set in advance)
$\lambda_S$ Sum mode actual slip ratio
$y_{DH}$ Upper limit value of the difference mode target slip ratio

Fig. 9 A

Difference mode target slip ratio $y_D$
$y_3$
$y_{DH}$
$y_4$
$F_D$
$F_S$
0
$y_2$
$y_{SH}$
$y_1$
Sum mode target slip ratio $y_S$
$F_S$ Required sum mode driving force
$F_D$ Required difference mode driving force
$y_1$ First predetermined value (maximum value that the sum mode target slip ratio can take)
$y_2$ Second predetermined value (set in advance)
$y_3$ Third predetermined value (maximum value that the difference mode target slip ratio can take)
$y_4$ Fourth predetermined value (set in advance)
$y_{SH}$ Upper limit value of the sum mode target slip ratio
$y_{DH}$ Upper limit value of the difference mode target slip ratio


Fig. 9 B

Difference mode target slip ratio $y_D$
$y_3$
$y_{DH}$
$y_4$
$k \cdot F_D$
$F_S$
0
$y_2$
$y_{SH}$
$y_1$
Sum mode target slip ratio $y_S$
$F_S$ Required sum mode driving force
$F_D$ Required difference mode driving force
$y_1$ First predetermined value (maximum value that the sum mode target slip ratio can take)
$y_2$ Second predetermined value (set in advance)
$y_3$ Third predetermined value (maximum value that the difference mode target slip ratio can take)
$y_4$ Fourth predetermined value (set in advance)
$y_{SH}$ Upper limit value of the sum mode target slip ratio
$y_{DH}$ Upper limit value of the difference mode target slip ratio
$k < 1$ For acceleration/deceleration performance (straight travelling performance)
$k = 1$ Balanced
$k > 1$ For turning performance

Fig. 10 A

Longitudinal force
$F_{X2}$
$F_{X1}$
Actual slip ratio
$\lambda_1$
$\lambda_2$
Lateral slip angle
Small
Large

Fig. 10 B

Lateral force
$F_{X2}$
$F_{Y1}$
$F_{X1}$
$F_{Y2}$
Actual slip ratio
$\lambda_1$
$\lambda_2$
Lateral slip angle
Small
Large

## INTERNATIONAL SEARCH REPORT

International application No.
**PCT/JP2024/027746**

**A. CLASSIFICATION OF SUBJECT MATTER**

***B60L 15/20***(2006.01)i; ***B60W 30/00***(2006.01)i
FI: B60L15/20 S; B60W30/00

According to International Patent Classification (IPC) or to both national classification and IPC

**B. FIELDS SEARCHED**

Minimum documentation searched (classification system followed by classification symbols)

B60L15/20; B60W30/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/013565 A1 (MITSUBISHI JIDOSHA KOGYO KABUSHIKI KAISHA) 09 February 2023 (2023-02-09)<br>entire text | 1-10 |
| A | JP 2022-135719 A (TOYOTA JIDOSHA KABUSHIKI KAISHA) 15 September 2022 (2022-09-15)<br>entire text | 1-10 |
| A | WO 2016/125686 A1 (NTN CORPORATION) 11 August 2016 (2016-08-11)<br>entire text | 1-10 |
| A | JP 2011-251579 A (MUTO, Nobuyoshi) 15 December 2011 (2011-12-15)<br>entire text | 1-10 |
| A | JP 5-133249 A (NISSAN MOTOR CO., LTD.) 28 May 1993 (1993-05-28)<br>entire text | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/027746**

**C. DOCUMENTS CONSIDERED TO BE RELEVANT**

| Category* | Citation of document, with indication, where appropriate, of the relevant passages | Relevant to claim No. |
| --- | --- | --- |
| A | JP 5333343 B2 (MITSUBISHI JIDOSHA KOGYO KABUSHIKI KAISHA) 06 November 2013 (2013-11-06) entire text | 1-10 |

Form PCT/ISA/210 (second sheet) (July 2022)

**INTERNATIONAL SEARCH REPORT**
**Information on patent family members**

International application No.
**PCT/JP2024/027746**

| Patent document cited in search report | Publication date (day/month/year) | Patent family member(s) | Publication date (day/month/year) |
|---|---|---|---|
| WO 2023/013565 A1 | 09 February 2023 | EP 4382346 A1<br>entire text<br>CN 117677528 A | |
| JP 2022-135719 A | 15 September 2022 | US 2022/0281472 A1<br>entire text<br>CN 115092111 A | |
| WO 2016/125686 A1 | 11 August 2016 | JP 2016-146731 A | |
| JP 2011-251579 A | 15 December 2011 | WO 2011/151936 A1 | |
| JP 5-133249 A | 28 May 1993 | (Family: none) | |
| JP 5333343 B2 | 06 November 2013 | US 2011/0281684 A1<br>entire text<br>EP 2386782 A2<br>CN 102322508 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019103249 A
- WO 2023013565 A1


### Non-patent literature cited in the description


- **HIROSHI FUJIMOTO** ; **TAKESHI TAKANO** ; **HIDETOSHI NOBUMOTO** ; **TOSHIMI OKAZAKI**. Driving Force Control Method Based on High Accuracy Slip Ratio Control. *Mazda Technical Review*, 2015 (32), 228-233
- **HIROSHI FUJIMOTO** ; **JUNYA AMADA** ; **TAKAYUKI MIYAJIMA**. Development and Control of an Electric Vehicle with Variable Drive Unit System. *Proceedings of the 2013 JSAE Annual Spring Congress*, 2013 (8-13), 17-20
- **MASATAKA YOSHIMURA** ; **HIROSHI FUJIMOTO**. Driving Torque Control Method for Electric Vehicle with In-Wheel Motors. *IEEJ Transactions on Industry Applications (D)*, 2011, vol. 131 (5), 721-728